(19) Europäisches Patentamt
European Patent Office
Office européen des brevets

(11) **EP 2 682 844 A2**

(12) **EUROPÄISCHE PATENTANMELDUNG**

(43) Veröffentlichungstag:
**08.01.2014 Patentblatt 2014/02**

(51) Int Cl.:
***G06F 3/03*** (2006.01)

(21) Anmeldenummer: 13455005.2

(22) Anmeldetag: **27.06.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **02.07.2012 AT 502602012**

(71) Anmelder:
• **Seibersdorf Labor GmbH**
**2444 Seibersdorf (AT)**

• **AIT Austrian Institute of Technology GmbH**
**1220 Wien (AT)**

(72) Erfinder:
• **Bammer, Manfred**
**1220 Wien (AT)**
• **Schmid, Gernot**
**2833 Bromberg (AT)**

(74) Vertreter: **Wildhack & Jellinek**
**Patentanwälte**
**Landstraßer Hauptstraße 50**
**1030 Wien (AT)**

(54) **Verfahren zur Bestimmung der Relativposition einer Detektoreinheit**

(57)     Die Erfindung betrifft ein Verfahren zur Bestimmung der Relativposition einer Detektoreinheit (1) gegenüber einem Positionierungselement (10),
- wobei auf dem Positionierungselement (10) ein Referenzbalken (13) und ein Messbalken (12) angeordnet sind,
- wobei die beiden Balken (12, 13) einander zumindest abschnittsweise gegenüberliegend ausgerichtet sind,
- wobei die Detektoreinheit (1) zur Bestimmung der eines Flächenbilds (31) ausgebildet ist, **dadurch gekennzeichnet,**
- dass die Detektoreinheit (1) gegenüber dem Positionierungselement (10) bei einer bestimmten Position positioniert wird,
- dass mit der Detektoreinheit (1) ein Flächenbild (31) des Positionierungselements (10) erstellt wird, wobei auf dem Flächenbild (31) beide Balken (12, 13) abgebildet sind,
- dass in Bezug auf das Flächenbild (31) Referenzlinie (34) festgelegt wird und aus den Helligkeitswerten der auf dieser Referenzlinie (34) liegenden Pixel (36) ein Helligkeitsprofil (22) erstellt wird,
- dass jeweils auf der Referenzlinie jeweils eine Eigenschaft des Messbalkens (12) und eine Eigenschaft des Referenzbalkens (13) ermittelt werden, und
- dass das Verhältnis zwischen der für den Messbalken (12) ermittelten Eigenschaft und der für den Referenzbalken (13) ermittelten Eigenschaft ermittelt und dieses Verhältnis als Maß (M) für die Relativposition zur Verfügung gehalten wird.

Fig. 4

**Beschreibung**

Die Erfindung betrifft ein Verfahren zur Bestimmung der Relativposition einer Detektoreinheit gegenüber einem Positionierungselement gemäß dem Oberbegriff des Patentanspruches 1. Weiters betrifft die Erfindung eine Detektoreinheit zur Bestimmung ihrer Position relativ zu einem Positionierungselement gemäß dem Oberbegriff des Patentanspruches 7. Weiters betrifft die Erfindung eine Anordnung einer Detektoreinheit sowie eines Positionierungselements gemäß dem Oberbegriff gemäß dem Patentanspruch 13.

Ist im Zusammenhang mit der Erfindung von Helligkeitswerten die Rede, so werden im Rahmen dieser Erfindung hierunter auch die mehrwertigen Helligkeitswerte von Farbbildsensoren verstanden. So weisen beispielsweise auch Pixel eines Flächenbilds, denen jeweils ein Rot-, Grün- und Blauwert zugewiesen ist, auch dann unterschiedliche Helligkeitswerte auf, wenn sich jeweils nur einzelne der Farbwerte (Rot, Grün oder Blau) voneinander unterscheiden.

Aus dem Stand der Technik ist eine Vielzahl unterschiedlicher Einheiten bekannt, mit denen die Relativposition zwischen zwei Gegenständen ermittelbar ist. So ist beispielsweise aus der österreichischen Patentanmeldung A 504/2010 sowie aus der Veröffentlichung *"A Passive NFC Analog Scale for Electronically Capturing Subjective Parameters in the Frame of Patient Remote Monitoring and AAL Applications", SCHMID* bekannt, dass die Relativposition zwischen einer Detektoreinheit und einem Positionierungselement mittels eines induktiven Positionssensors zu lösen ist, dessen Ausgangssignale an einen NFC-kompatiblen Transponderchip weitergereicht und über eine verhältnismäßig kurze Strecke zwischen der Detektoreinheit und der Positionierungseinheit mittels NFC übertragen werden. Von der Detektoreinheit können die erfassten Daten weiterübermittelt oder ausgewertet werden.

Wesentliche Nachteile dieses Vorgehens liegen darin, dass eine flächendeckende Verfügbarkeit von NFC-fähigen Mobiltelefonen bislang nicht gewährleistet ist und dass das Verfahren derzeit somit nur mit speziell adaptieren Detektoreinheiten durchgeführt werden kann. Weiters besteht das Problem, dass passiv (d.h. ohne eigene Energieversorgung) betreibbare NFC/RFID-Transponderchips mit einer Schnittstelle zur Detektion von elektrischen Signalen, derzeit nicht serienmäßig verfügbar sind.

Aufgabe der Erfindung ist es, eine Alternative zu der aus dem Stand der Technik bekannten Detektoreinheit und zu dem aus dem Stand der Technik bekannten Verfahren zur Bestimmung der Relativposition der Detektoreinheit gegenüber einem Positionierungselement zu schaffen, die ohne die Verwendung von NFC-fähigen Detektoreinheiten auskommt.

Dies wird bei einem Verfahren zur Bestimmung der Relativposition einer Detektoreinheit gegenüber einem Positionierungselement,

- wobei auf dem Positionierungselement zwei Balken angeordnet sind, nämlich

- ein Referenzbalken, der entlang einer vorgegebenen Achse ausgerichtet ist, wobei zumindest eine Eigenschaft des Referenzbalken über den Verlauf des Referenzbalkens unverändert ist, und

- ein Messbalken der entlang derselben Achse ausgerichtet ist, wobei zumindest eine Eigenschaft des Referenzbalken über den Verlauf des Messbalkens monoton ansteigt,

- wobei die beiden Balken einander zumindest abschnittsweise gegenüberliegend ausgerichtet sind und sich vom Hintergrund des Positionierungselements farblich und/oder in Bezug auf ihre Helligkeit unterscheiden,

- wobei die Detektoreinheit zur Bestimmung der eines Flächenbilds ausgebildet ist und eine Anzahl von Sensorpixeln aufweist, welche die unterschiedliche Farbgebung und/oder Helligkeit zwischen dem Balken und dem Hintergrund des Positionierungselements voneinander unterscheiden und als unterschiedliche Helligkeitswerte detektieren, dadurch erreicht,

- dass die Detektoreinheit gegenüber dem Positionierungselement bei einer bestimmten Position positioniert wird,

- dass mit der Detektoreinheit ein Flächenbild des Positionierungselements erstellt wird, wobei auf dem Flächenbild beide auf dem Positionierungselement befindlichen, insbesondere aufgedruckten, Balken zumindest teilweise abgebildet sind,

- dass in Bezug auf das Flächenbild eine die Abbilder beider Balken schneidende Referenzlinie festgelegt wird und aus den Helligkeitswerten der auf dieser Referenzlinie liegenden Pixel ein Helligkeitsprofil erstellt wird,

- dass jeweils auf der Referenzlinie jeweils eine Eigenschaft des Messbalkens und eine Eigenschaft des Referenzbalkens ermittelt werden, und

- dass das Verhältnis zwischen der für den Messbalken ermittelten Eigenschaft und der für den Referenzbalken ermittelten Eigenschaft ermittelt und dieses Verhältnis als Maß für die Relativposition zur Verfügung gehalten wird.

Eine besonders einfache Detektion der Relativposition kann erreicht werden, indem dass

- der Referenzbalken mit konstanter Dicke und der Messbalken mit steigender, nach einer Richtung zunehmender Dicke mit vom Hintergrund des Positionierungselements abweichender Farbgebung und/oder Helligkeit angeordnet sind,

- dass die Detektoreinheit zur Bestimmung eines Flächenbilds ausgebildet ist und eine Anzahl von Sensorpixeln aufweist, welche die unterschiedliche Farbgebung und/oder Helligkeit zwischen dem Balken und dem Hintergrund des Positionierungselements voneinander unterscheiden und als unterschiedliche Helligkeitswerte detektieren, - dass die Detektoreinheit gegenüber dem Positionierungselement bei einer bestimmten Position positioniert wird,

- dass mit der Detektoreinheit ein Flächenbild des Positionierungselements erstellt wird, wobei auf dem Flächenbild beide auf dem Positionierungselement befindlichen, insbesondere aufgedruckten, Balken zumindest teilweise abgebildet sind,
- dass in Bezug auf das Flächenbild eine die Abbilder beider Balken schneidende Referenzlinie festgelegt wird und aus den Helligkeitswerten der auf dieser Referenzlinie liegenden Pixel ein Helligkeitsprofil erstellt wird,
- dass sprungartige Helligkeitsänderungen im Helligkeitsprofil ermittelt werden und diese als Sprünge den Kanten der Balken zugeordnet werden,
- dass für beide Balken jeweils diejenigen Sprünge im Helligkeitsprofil bestimmt werden, die vom jeweiligen Balken herrühren, und für jeden der Balken der Abstand der jeweiligen von ihm herrührenden Sprünge ermittelt und dem jeweiligen Balken als Profilbreite zugeordnet wird, und
- dass das Verhältnis zwischen der Profilbreite des Messbalkens und der Profilbreite des Referenzbalkens ermittelt wird und dieses Verhältnis als Maß für die Relativposition zur Verfügung gehalten wird.

Hierbei kann zur genaueren Berechnung der jeweiligen Relativposition vorgesehen sein, dass bei der Bestimmung der Profilbreiten der Balken jeweils zwei von jedem der beiden Balken herrührende Sprünge im Helligkeitsprofil detektiert werden, wobei für jeden der Sprünge jeweils ein Koordinatenwert in Bezug auf ein vorgegebenes auf die Referenzlinie bezogenes Koordinatensystem detektiert wird, von denen die beiden Sprünge mit den numerisch geringeren Koordinatenwerten einem der Balken zugeordnet werden und die beiden übrigen Sprünge dem jeweils anderen Balken zugeordnet werden und für jeden der Balken jeweils seine Profilbreite als Differenz der Koordinatenwerte der diesem Balken zugeordneten Sprünge ermittelt wird und die so ermittelte Profilbreite dem jeweiligen Balken zugeordnet wird.

Zur Unterscheidung zwischen Messbalken und Referenzbalken kann vorgesehen sein, dass die minimale Dicke des Messbalkens größer oder gleich der Dicke des Referenzbalkens ist, und dass dasjenige Abbild eines Balkens im Flächenbild mit der geringeren Profilbreite als Abbild des Referenzbalkens detektiert wird und das jeweils andere Abbild eines Balkens mit der jeweils größeren Profilbreite als Abbild des Messbalkens detektiert wird.

Ein bevorzugter Aspekt der Erfindung sieht vor, dass das aufgenommene Flächenbild und die Referenzlinie so gewählt werden, dass sich beim Schnitt zwischen der Referenzlinie mit den Abbildern der Balken zwei unterschiedlich lange Profilbreiten der Balken ergeben.

Um eine präzisere Bestimmung der jeweiligen Relativposition zu erhalten, kann vorgesehen sein,

- dass die Referenzlinie parallel zu einer Bildachse des Flächenbilds gewählt wird und vorzugsweise durch den Mittelpunkt des Flächenbilds verläuft und/oder
- dass die Lage und Ausrichtung des Abbilds des Referenzbalkens im Flächenbild detektiert wird und die Referenzlinie normal zur Ausrichtung des Abbilds des Referenzbalkens gewählt wird, wobei die Referenzlinie vorzugsweise durch den Mittelpunkt des Flächenbilds verläuft.

Um eine Überwachung der jeweiligen Relativposition zu ermöglichen, kann vorgesehen sein, dass die Relativposition der Detektoreinheit gegenüber dem Positionierungselement zu vorgegeben Zeitpunkten, insbesondere in vorgegebenen Zeitintervallen oder laufend, bestimmt wird.

Um dem Benutzer die jeweilige Relativposition zugänglich zu machen, kann vorgesehen sein, dass die jeweils ermittelte Relativposition der Detektoreinheit gegenüber dem Positionierungselement, insbesondere auf einem Display auf der Detektoreinheit, angezeigt wird.

Um Bewegungen und Veränderungen der Relativposition ermitteln zu können, kann vorteilhaft vorgesehen sein, dass die Referenzlinie vorab in Bezug auf das Flächenbild festgelegt wird und für die einzelnen aufeinander folgenden Positionsbestimmungen in Bezug auf das jeweilige Flächenbild unverändert bleibt.

Eine weitere Verbesserung bzw. Präzisierung der Relativposition kann erreicht werden, indem eine Anzahl parallel zur Referenzlinie verlaufender weiterer Referenzlinien gewählt werden, wobei für jede der weiteren Referenzlinien gesondert

- aus den Helligkeitswerten der auf der jeweiligen weiteren Referenzlinie liegenden Pixel ein weiteres Helligkeitsprofil erstellt wird,

  - dass sprungartige Helligkeitsänderungen im jeweiligen weiteren Helligkeitsprofil ermittelt werden und diese als weitere Sprünge den Kanten der Balken zugeordnet werden,
  - dass für beide Balken jeweils diejenigen weiteren Sprünge im weiteren Helligkeitsprofil bestimmt werden, die vom jeweiligen Balken herrühren, und für jeden der Balken der Abstand der jeweiligen von ihm herrührenden Sprünge ermittelt und dem jeweiligen Balken als weitere Profilbreite zugeordnet wird, und
  - dass ein weiteres Verhältnis zwischen der weiteren Profilbreite des Messbalkens und der weiteren Profilbreite des Referenzbalkens ermittelt wird und dieses weitere Verhältnis als weiteres Maß für die Relativposition zur Verfügung gehalten wird, und

- dass durch Mittelwertbildung sämtlicher der Referenzlinie und den weiteren Referenzlinien zugeordneter Maße und weiteren Maße für die Relativposition ein mittleres Maß (Mm) für die Relativposition ermittelt und zur Verfügung gehalten wird.

Um einen Einsatz eines erfindungsgemäßen Verfahrens mit einem Mobiltelefon zu ermöglichen, kann vorgesehen sein, dass ein Mobiltelefon als Detektoreinheit herangezogen wird, wobei das Flächenbild von einer im Mobiltelefon integrierten Flächenbildsensor in Form einer Kamera aufgenommen wird und wobei die Auswertung des Flächenbildes sowie die erfindungsgemäße Bestimmung des Maßes für die Relativposition von einem dem Flächenbildsensor nachgeschalteten Verarbeitungseinheit des Mobiltelefons vorgenommen wird.

Um eine einfache Zuordnung der Relativposition zu einer vorgegebenen Kennung zu ermöglichen kann vorgesehen sein, dass die Detektoreinheit, insbesondere mittels einer NFC/RFID-Schnittstelle, die im Transponderchip abgespeicherte Kennung abfragt und die Kennung dem jeweiligen Maß für die Relativposition zuordnet und das Maß sowie die Kennung als gemeinsamen Datensatz zur Verfügung hält.

Alternativ kann zum selben Zweck vorgesehen sein, dass auf dem Positionierungselement ein Code, insbesondere ein Barcode oder ein QR-Code, aufgedruckt ist, der eine Kennung in codierter Form enthält, wobei im Zuge der Ermittlung des Maßes jeweils der Code eingelesen und die darin enthaltene Kennung ermittelt wird, und die Detektoreinheit die Kennung dem jeweiligen Maß für die Relativposition zuordnet und das Maß sowie die Kennung als gemeinsamen Datensatz zur Verfügung hält.

Um eine zentrale Erfassung der jeweils vom Benutzer eingestellten Relativpositionen zu ermöglichen, kann vorgesehen sein, dass auf dem Positionierungselement ein Code, insbesondere ein Barcode oder ein QR-Code, aufgedruckt ist, der eine Kennung in codierter Form enthält, wobei im Zuge der Ermittlung des Maßes jeweils der Code eingelesen und die darin enthaltene Kennung ermittelt wird, und die Detektoreinheit die Kennung dem jeweiligen Maß für die Relativposition zuordnet und das Maß sowie die Kennung als gemeinsamen Datensatz zur Verfügung hält.

Weiters betrifft die Erfindung eine Detektoreinheit zur Bestimmung ihrer Relativposition relativ zu einem Positionierungselement,

- wobei auf dem Positionierungselement zwei Balken angeordnet sind, nämlich
- ein Referenzbalken, der entlang einer vorgegebenen Achse ausgerichtet ist, wobei zumindest eine Eigenschaft des Referenzbalken über den Verlauf des Referenzbalkens unverändert ist, und
- ein Messbalken der entlang derselben Achse ausgerichtet ist, wobei zumindest eine Eigenschaft des Referenzbalken über den Verlauf des Messbalkens monoton ansteigt,
- wobei die beiden Balken einander zumindest abschnittsweise gegenüberliegend ausgerichtet sind und sich vom Hintergrund des Positionierungselements farblich und/oder in Bezug auf ihre Helligkeit unterscheiden.

Erfindungsgemäß ist hierbei vorgesehen, dass dem Flächenbildsensor eine Verarbeitungseinheit zur Verarbeitung eines vom Positionierungselement erstellten Flächenbilds nachgeschaltet ist,

- dass die Verarbeitungseinheit eine Profilbestimmungseinheit aufweist, die die Helligkeitswerte von auf einer Referenzlinie liegenden Pixeln heranzieht und zu einem Helligkeitsprofil zusammenfügt,
- dass die Verarbeitungseinheit eine der Profilbestimmungseinheit nachgeschaltete Detektoreinheit aufweist, die jeweils die jeweilige Eigenschaft des des Abbilds Messbalkens sowie des Abbilds des Referenzbalkens im Bereich der Referenzlinie ermittelt
- dass die Verarbeitungseinheit eine der Breitenbestimmungseinheit nachgeschaltete Positionsbestimmungseinheit aufweist, die das Verhältnis zwischen der ermittelten Eigenschaft des Messbalkens und der ermittelten Eigenschaft des Referenzbalkens ermittelt und dieses Verhältnis als Maß für die Relativposition der Detektoreinheit gegenüber dem Positionierungselement zur Verfügung hält.

Eine besonders einfache Detektion der Relativposition kann erreicht werden, indem

- dem Flächenbildsensor eine Verarbeitungseinheit zur Verarbeitung eines vom Positionierungselement erstellten Flächenbilds nachgeschaltet ist,
- dass die Verarbeitungseinheit eine Profilbestimmungseinheit aufweist, die die Helligkeitswerte von auf einer Referenzlinie liegenden Pixeln heranzieht und zu einem Helligkeitsprofil zusammenfügt,
- dass die Verarbeitungseinheit eine der Profilbestimmungseinheit nachgeschaltete Sprungdetektoreinheit aufweist, die sprungartige Helligkeitsänderungen im Helligkeitsprofil ermittelt und die so detektierten Sprünge den Kanten der Balken zuordnet,
- dass die Verarbeitungseinheit eine der Sprungdetektoreinheit nachgeschaltete Breitenbestimmungseinheit aufweist, die jeweils den Abstand zwischen denjenigen Sprüngen im Helligkeitsprofil bestimmt, die von den Abbildern der jeweiligen Balken herrühren, und diesen Abstand dem jeweiligen Balken als Profilbreite zuordnet,
- dass die Verarbeitungseinheit eine der Breitenbestimmungseinheit nachgeschaltete Positionsbestimmungseinheit aufweist, die das Verhältnis zwischen der Profilbreite des Messbalkens und der Profilbreite des Referenzbalkens ermittelt und dieses Verhältnis als Maß für die Relativposition der Detektoreinheit gegenüber dem Positionierungselement zur Verfügung hält.

Hierbei kann zur genaueren Berechnung der jeweiligen Relativposition vorgesehen sein, dass die Sprungdetektoreinheit die vier markantesten Sprünge im Helligkeitsprofil detektiert, für jeden der Sprünge jeweils einen Koordinatenwert detektiert und die beiden Sprünge mit den geringeren Koordinatenwerten einem der zuordnet und die beiden übrigen Sprünge dem jeweils anderen Balken zuordnet, und für jeden der Balken jeweils seine Profilbreite als Differenz der Koordinatenwerte der diesem Balken zugeordneten Sprünge ermittelt und die Profilbreite dem jeweiligen Balken zuordnet.

Zur Unterscheidung zwischen Messbalken und Referenzbalken kann vorgesehen sein, dass die Breitenbestimmungseinheit den Balken mit der geringeren Profilbreite als Referenzbalken detektiert und den jeweils anderen Balken mit der größeren Profilbreite als Messbalken detektiert.

Um eine präzisere Bestimmung der jeweiligen Relativposition zu erhalten, kann vorgesehen sein,

- dass die Referenzlinie parallel zu einer Bildachse des Flächenbilds verläuft, und dass diese insbesondere durch den Mittelpunkt des vom Flächenbildsensor erstellten Flächenbilds verläuft und/oder
- dass die Profilbestimmungseinheit die Lage und Ausrichtung des Abbilds des Referenzbalkens im Flächenbild detektiert und die Referenzlinie normal zur Ausrichtung des Referenzbalkens vorgibt, wobei die Referenzlinie insbesondere durch den Mittelpunkt des Flächenbilds verläuft.

Eine weitere Verbesserung bzw. Präzisierung der Relativposition kann erreicht werden, indem durch eine Vielzahl von weiteren Verarbeitungseinheiten,

- wobei jede weitere Verarbeitungseinheit eine weitere Profilbestimmungseinheit aufweist, die die Helligkeitswerte von auf einer Referenzlinie liegenden Pixeln heranzieht und zu jeweils einem weiteren Helligkeitsprofil zusammenfügt,
- wobei jede weitere Verarbeitungseinheit eine der weiteren Profilbestimmungseinheit nachgeschaltete weitere Sprungdetektoreinheit aufweist, die sprungartige Helligkeitsänderungen im jeweiligen Helligkeitsprofil ermittelt und diese Sprünge den Kanten der Balken zuordnet,
- wobei jede weitere Verarbeitungseinheit eine der weiteren Sprungdetektoreinheit nachgeschaltete weitere Breitenbestimmungseinheit aufweist, die jeweils den Abstand zwischen denjenigen Sprüngen im jeweiligen Helligkeitsprofil bestimmt, die von den Abbildungen desselben Balkens herrühren und diesen Abstand dem jeweiligen Balken als weitere Profilbreite zuordnet, und
- wobei jede weitere Verarbeitungseinheit eine der weiteren Breitenbestimmungseinheit nachgeschaltete weitere Positionsbestimmungseinheit aufweist, die das Verhältnis zwischen der Profilbreite des Messbalkens und der Profilbreite des Referenzbalkens ermittelt und dieses Verhältnis als Maß für die Relativposition zur Verfügung hält,
- wobei der Verarbeitungseinheit und den weiteren Verarbeitungseinheiten eine Mittelwertbildungseinheit nachgeschaltet ist, der die am Ausgang der Positionsbestimmungseinheit sowie der weiteren Positionsbestimmungseinheiten anliegenden Maße zugeführt sind, und die durch Mittelwertbildung sämtlicher der Referenzlinie und den weiteren Referenzlinien zugeordneter Maßefür die Relativposition eine mittlere Relativposition ermittelt und zur Verfügung hält.

Um die jeweiligen Relativposition dem Benutzer zugänglich zu machen, kann vorgesehen sein, dass durch ein der Positionsbestimmungseinheit oder der Mittelwertbestimmungseinheit nachgeschaltetes Display, das die jeweils ermittelte Position, insbesondere unmittelbar nach ihrer Ermittlung anzeigt.

Um eine einfache Zuordnung der Relativposition zu einer vorgegebenen Kennung zu ermöglichen kann vorgesehen sein, dass die Detektoreinheit eine NFC/ RFID-Schnittstelle aufweist zur Detektion einer vorgegebenen Kennung eines auf einem Positionierungselement befindlichen Transponderchips, wobei der Positionsbestimmungseinheit oder der Mittelwertbestimmungseinheit eine der NFC/RFID-Schnittstelle nachgeschaltete Zuordnungseinheit nachgeschaltet ist, die bei Vorliegen eines Maßes für die Relativposition sowie einer Kennung das Maß für die Relativposition und die Kennung einander zuordnet und als gemeinsamen Datensatz bereithält.

Alternativ kann zum selben Zweck vorgesehen sein, dass die Detektoreinheit eine Ausleseeinheit zur Ermittlung einer Kennung aufweist, die in einem in einem Bildbereich des Abbilds des Positionierungelements abgebildeten und auf dem Positionierungselement aufgedruckten Code, insbesondere einem Barcode oder QR-Code, enthalten ist, wobei der Positionsbestimmungseinheit oder der Mittelwertbestimmungseinheit eine der Ausleseeinheit nachgeschaltete Zuordnungseinheit nachgeschaltet ist, die bei Vorliegen eines Maßes für die Relativposition sowie einer Kennung das Maß für die Relativposition und die Kennung einander zuordnet und als gemeinsamen Datensatz bereithält.

Um eine Überwachung der jeweiligen Relativposition zu ermöglichen und diese dem Benutzer zugänglich zu machen, kann vorgesehen sein, dass durch eine Triggereinheit, die die Verarbeitungseinheit zu vorgegeben Zeitpunkten, insbesondere in vorgegebenen Zeitintervallen oder laufend, aktiviert und die jeweils ermittelte Relativposition, insbesondere auf dem Display der Detektoreinheit, anzeigt.

Um einen Einsatz eines erfindungsgemäßen Verfahrens mit einem Mobiltelefon zu ermöglichen, kann vorgesehen sein, dass ausgebildet durch ein Mobiltelefon mit einer im Mobiltelefon integrierten Flächenbildkamera, wobei auf dem Mobiltelefon eine Softwareanwendung abläuft, die ein Maß für die Relativposition mit einem erfindungsgemäßen Verfahren bestimmt und/oder die vom Mobiltelefon ausgeführt wird und die Funktion der nachgeschalteten Verarbeitungseinheit ausführt.

Eine Positionsbestimmung wird auf einfache Weise ermöglicht durch eine Anordnung mit einer Detektoreinheit sowie einem Positionierungselement mit zwei auf ihm befindlichen, insbesondere aufgedruckten, Balken nämlich ein Referenzbalken mit konstanter Dicke und ein Messbalken mit steigender, nach einer Richtung zunehmender Dicke mit vom Hintergrund des Positionierungselements (abweichender Farbgebung angeordnet ist, wobei die beiden Balken einander gegenüberliegen, und dass insbesondere die minimale Dicke des Messbalkens größer oder gleich der Dicke des Referenzbalkens ist.

Einige Ausführungsbeispiele der Erfindung werden anhand der folgenden Figuren näher dargestellt.

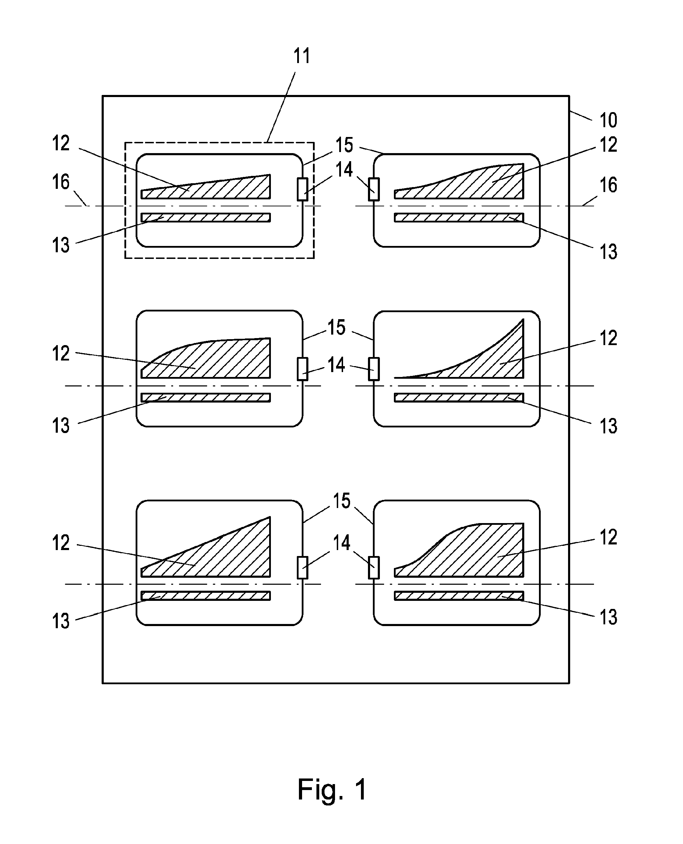

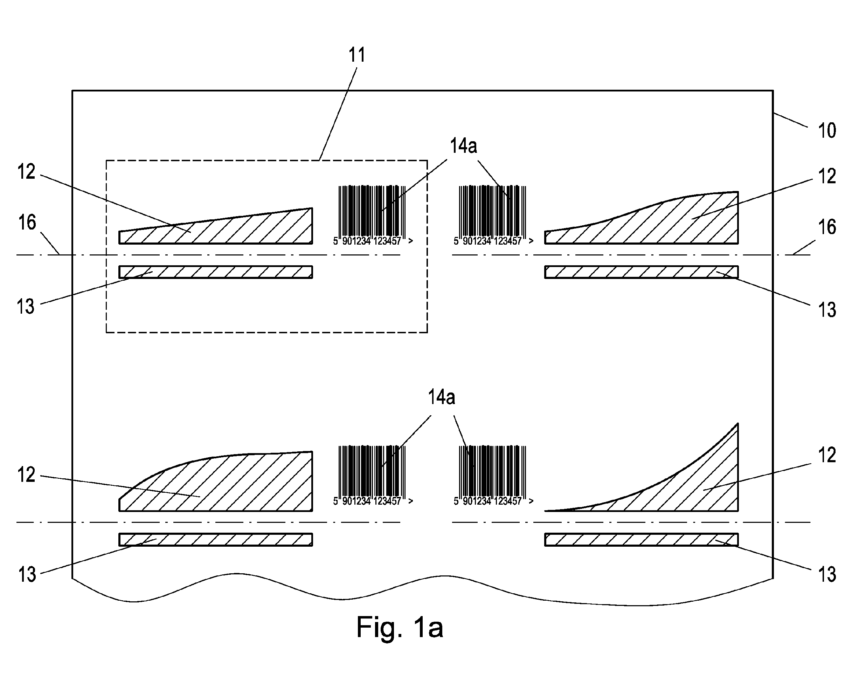

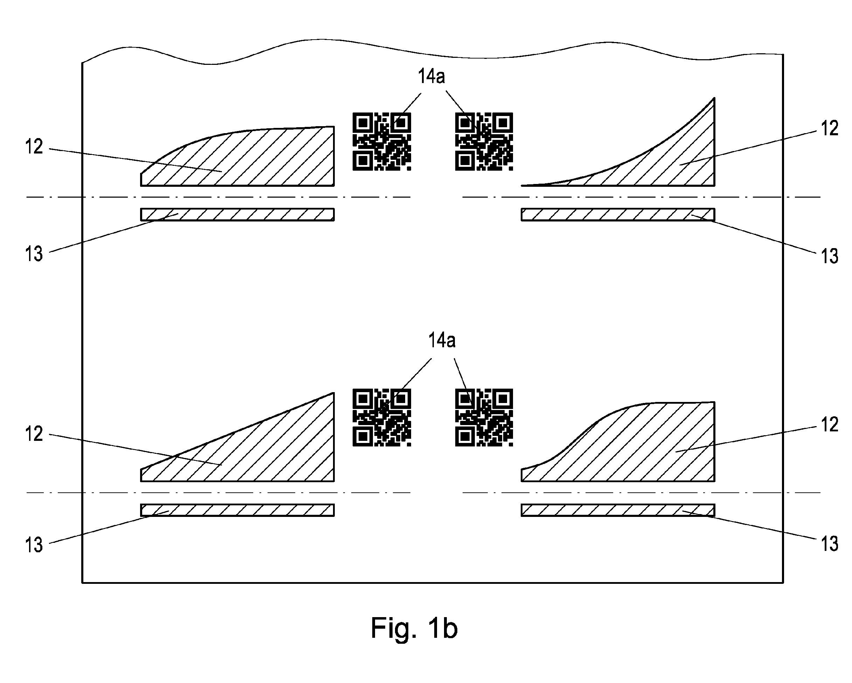

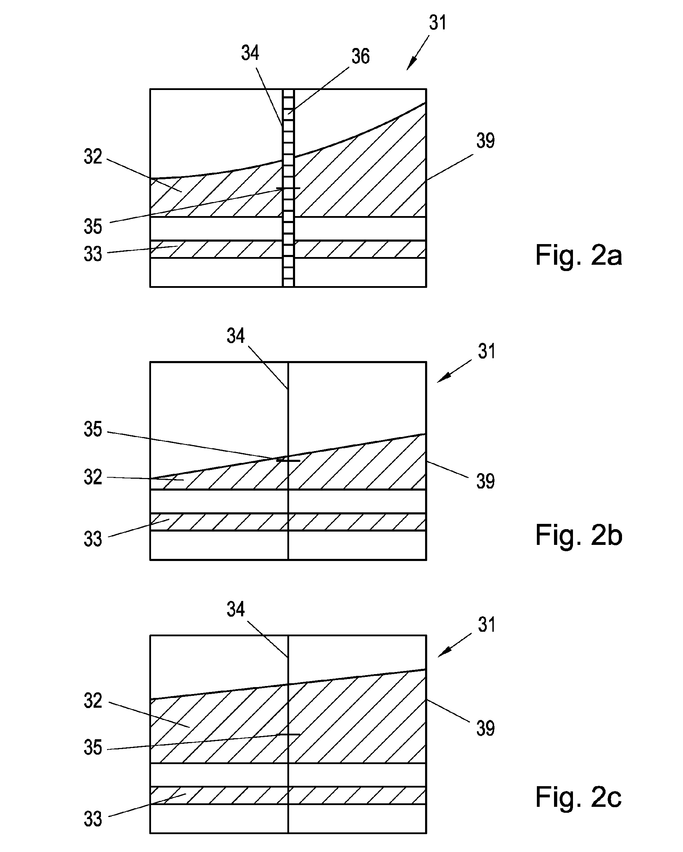

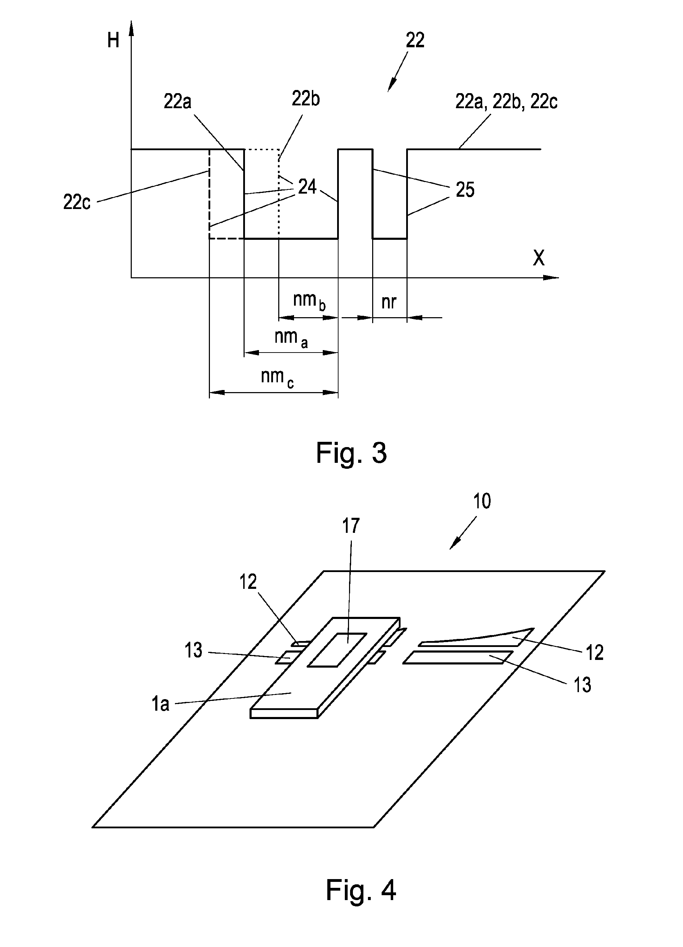

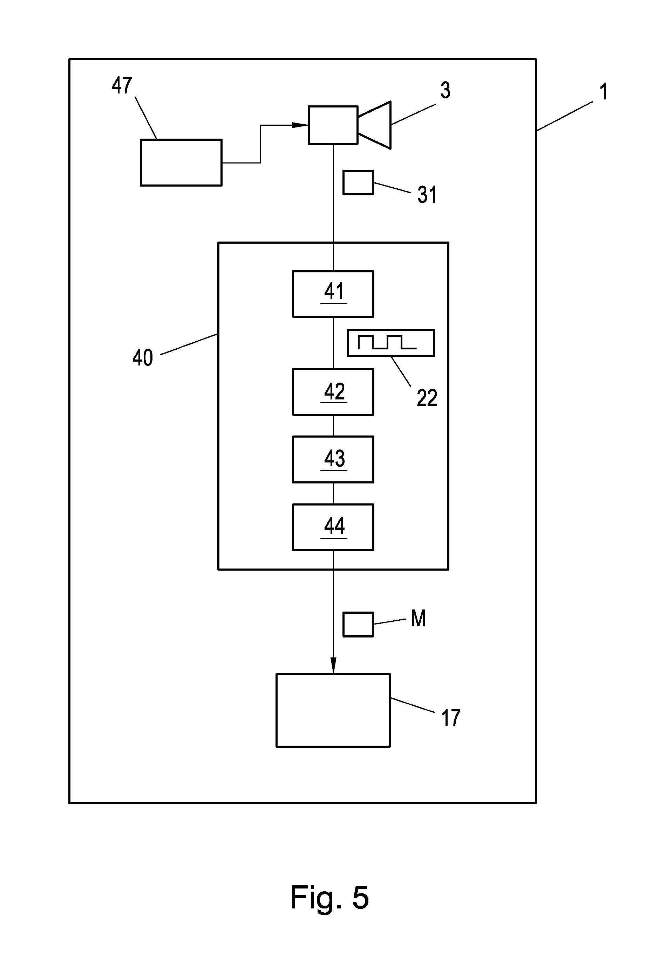

**Fig. 1** zeigt ein Positionierungselement mit einer Anzahl von auf ihm befindlichen Paaren von Balken. Fig. 1a und 1b zeigen eine alternative Ausführungsform eines Positionierungselements mit aufgedruckten Barcode bzw. QR-Code. **Fig. 2a, 2b, 2c** zeigen drei von der Detektoreinheit erstellte Bilder von Balkenpaaren aus unterschiedlichen Positionen. **Fig. 3** zeigt drei Helligkeitsprofile entlang der in **Fig. 2a bis 2c** dargestellten Referenzlinien. **Fig. 4** zeigt ein Ausführungsbeispiel einer erfindungsgemäßen Anordnung mit einer Detektoreinheit in Form eines Mobiltelefon, das über einem Positionierungselement mit einer Vielzahl von Balkenpaaren angeordnet ist. **Fig. 5** zeigt schematisch den inneren Aufbau einer Detektoreinheit.

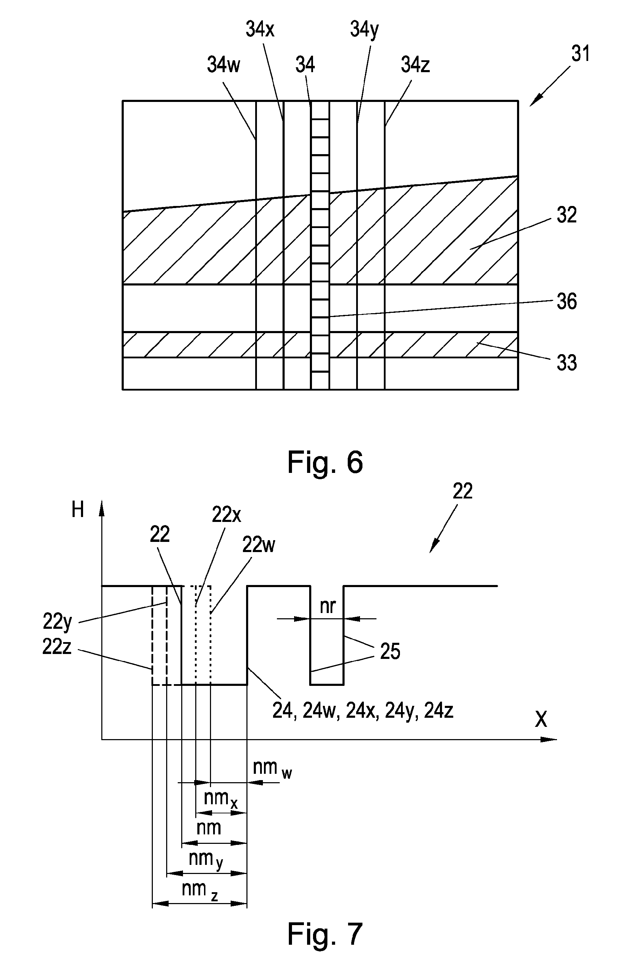

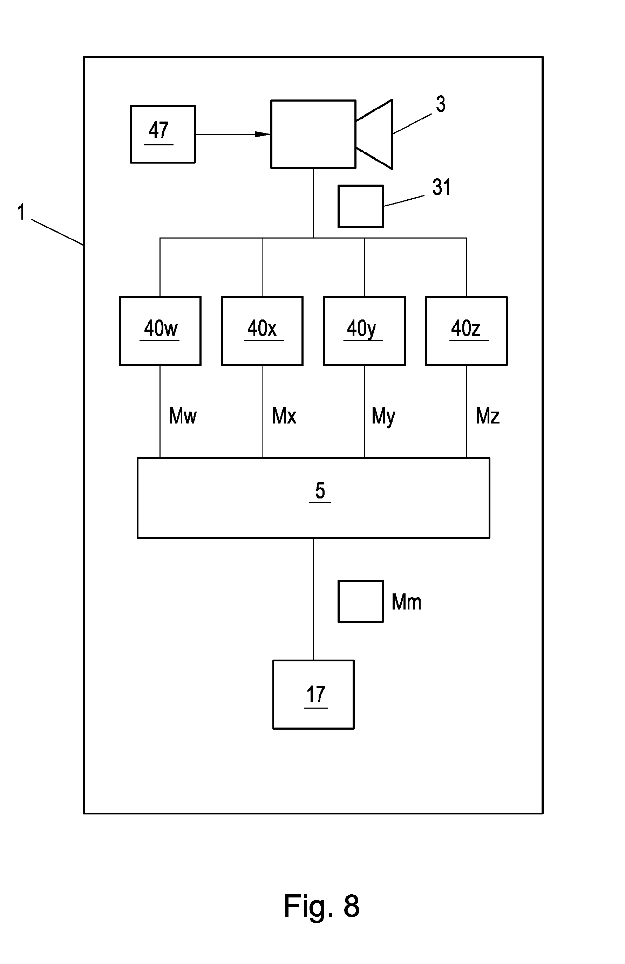

**Fig. 6** zeigt schematisch das Vorgehen bei einem weiteren Ausführungsbeispiel der Erfindung mit verbesserter Genauigkeit. **Fig. 7** zeigt Helligkeitsprofile entlang der dargestellten weiteren Referenzlinien, bei dem in **Fig. 6** dargestellten Ausführungsbeispiel der Erfindung. **Fig. 8** zeigt die beim dem in **Fig. 6 und 7** dargestellten Ausführungsbeispiel verwendete Detektoreinheit.

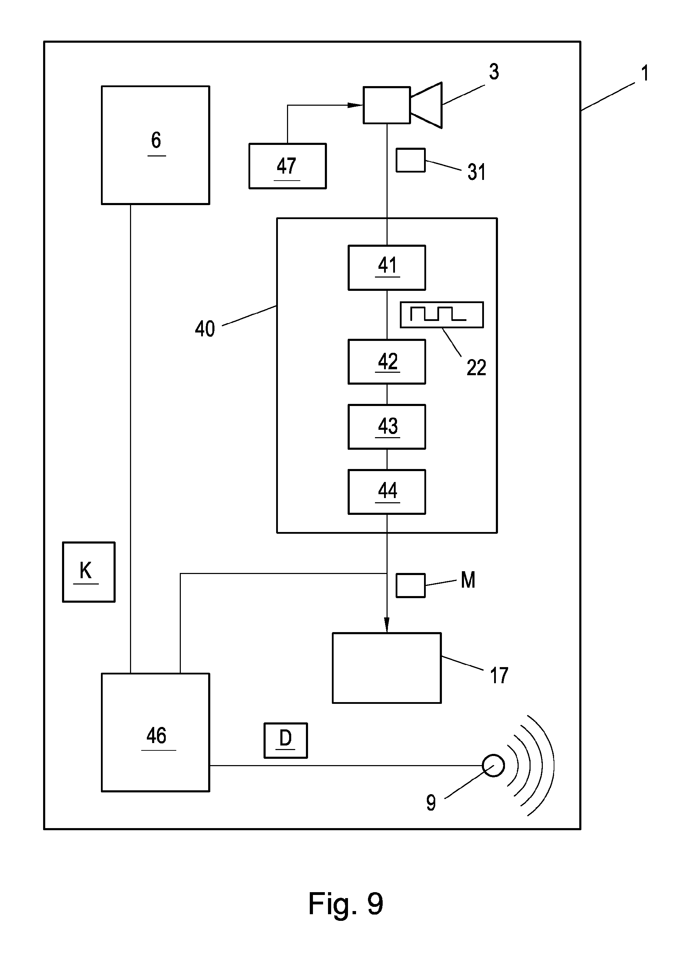

**Fig. 9** zeigt ein weiteres Ausführungsbeispiel einer erfindungsgemäßen Detektoreinheit, mit der ermittelte Relativpositionen eindeutig einem Balkenpaar zuordenbar sind und Datensätze einfach übertragbar sind.

In **Fig. 1** ist ein **erstes Ausführungsbeispiel** eines Positionierungselements 10 dargestellt, das im Zuge der Bestimmung der Relativpositionen einer Detektoreinheit 1 **(Fig. 4)** gegenüber diesem Positionierungselement 10 verwendet wird. Das Positionierungselement 10 weist eine Anzahl von Positionierungsbalkenpaaren 11 auf, die jeweils einen Messbalken sowie einen Referenzbalken 13 enthalten. Im vorliegenden Ausführungsbeispiel ist das Positionierungselement 10 als Papierbogen ausgeführt, auf den die einzelnen Positionierungsbalkenpaare 11 aufgedruckt sind. Jedes Positionierungsbalkenpaar 11 weist jeweils einen Messbalken 12 und einen Referenzbalken 13 auf, die einander gegenüberliegen.

Der Referenzbalken 13 ist im vorliegenden Fall rechteckig ausgebildet, wobei zwei einander gegenüberliegende Kanten des Referenzbalkens 13 wesentlich länger ausgebildet sind, als die beiden übrigen Kanten. Die Dicke des Referenzbalkens 13 ist über seinen gesamten Verlauf gleich.

Gegenüber dem Referenzbalken 13 ist der bereits erwähnte Messbalken 12 angeordnet, dessen Dicke nach einer Richtung hin zunimmt. Der Messbalken 12 weist zwei lange einander gegenüberliegende Kanten auf, deren Abstand nach einer Richtung zunimmt. In dem in **Fig. 1** dargestellten Positionierungsbalkenpaar 11 des Positionierungselements 10 steigt die Dicke des Messbalkens 12 linear über seinen Verlauf entlang einer parallel zur den langen Kanten des Referenzbalkens 13 verlaufenden Achse 16 an.

Eine der langen Begrenzungskanten des Referenzbalkens 13 liegt einer der Begrenzungskanten des Messbalkens 12 gegenüber, wobei diese beiden Begrenzungskanten im vorliegenden Ausführungsbeispiel gleich lang sind, zueinander parallel verlaufen und gegenüberliegende Kanten eines Rechtecks bilden. Der Innenbereich zwischen den Kanten des Messbalkens 12 sowie der Innenbereich zwischen den Kanten des Referenzbalkens 13 ist homogen gefüllt.

Die minimale Dicke des Messbalkens 12 entspricht bei dem exemplarisch herausgegriffenen Positionierungsbalkenpaar 11 der Dicke des Referenzbalkens 13, die maximale Dicke des Messbalkens 12 entspricht dem dreifachen der Dicke des Referenzbalkens 13.

Weiters ist dem Positionierungsbalkenpaar 11 im vorliegenden Ausführungsbeispiel ein im Positionierungselement 10 integrierter Transponderchip 14 zugeordnet, auf dem eine Kennung K abgespeichert ist, die dem jeweiligen Positionierungsbalkenpaar 11 eindeutig zugeordnet ist.

Weiters weist die Positionierungseinheit 10 für jedes Positionierungsbalkenpaar 11 jeweils eine ringförmig geschlossen verlaufende und die beiden Balken 12, 13 umgebende Antenne 15 auf, die an den Transponderchip 14 angeschlossen ist.

Alternativ besteht die Möglichkeit, anstelle eines NFC- oder RFID-Transponderchips einen Barcode oder einen QR-Code im Bereich des jeweiligen Positionierungsbalkenpaars 11 anzuordnen, der gleichzeitig mit dem jeweiligen Positionierungsbalkenpaars 11 im Aufnahmebereich des Flächenbildsensors 3 liegt. Gemeinsam mit den beiden Balken 12, 13 wird auch der Barcode oder QR-Code **(Fig. 1a, 1b)** erfasst.

Neben dem linearen Verlauf des Messbalkens 12, bei dem die Dicke des Messbalkens 12 linear mit der jeweiligen Position entlang der dem Referenzbalken 13 gegenüberliegenden Kante bzw. der Achse 16 ansteigt, sind in **Fig. 1** weitere Verläufe von Messbalken 12 dargestellt, bei denen die vom Referenzbalken 13 entfernt liegende lange Kante des Messbalkens 12 eine gekrümmte Form aufweist, wobei jedoch der Abstand zwischen den beiden langen Kanten des Messbalkens 12 nach einer Richtung entlang der Achse 16 zunimmt.

In **Fig. 2a** ist ein von einem Flächenbildsensor 3 erstelltes Flächenbild 31 dargestellt, auf dem ein Teilbereich des Positionierungselements 10 abgebildet ist. Im Bezug auf das Flächenbild 31 ist eine Referenzlinie 34 vorgegeben. Die einzelnen Pixel 36 der Referenzlinie 34 sind in **Fig. 2a** dargestellt. Im vorliegenden Fall ist die Referenzlinie 34 derart gewählt, dass sie parallel zu der vertikalen Bildkante 39 verläuft und zudem durch den Mittelpunkt 35 tritt. Im Flächenbild 31 sind sowohl das Abbild 32 des Messbalkens 12, sowie das Abbild 33 des Referenzbalkens 13 dargestellt. Diese sind in der schematischen Darstellung der **Fig. 2a, 2b, 2c und 6** schraffiert dargestellt, wenngleich der Innenbereich zwischen den Kanten des Abbilds 32 des Messbalkens 12 sowie der Innenbereich zwischen den Kanten des Abbilds 33 Referenzbalkens 13 eine annähernd homogene Farb- und Helligkeitsverteilung aufweisen.

In den beiden **Fig. 2b und 2c** sind jeweils weitere Abbilder des Positionierungselements 10 dargestellt, wobei das in **Fig. 2b** dargestellte Flächenbild 31 von einer weiter in Richtung des schmalen Endes des Messbalkens 12 befindlichen Detektoreinheit 1 aufgenommen wurde und das in **Fig. 2c** dargestellte Flächenbild 31 von einer in Richtung des breiteren Endes des Messbalkens 12 befindlichen Detektoreinheit 1 aufgenommen wurde. Aus allen drei in den **Fig. 2a, 2b, 2c** dargestellten Aufnahmen ist ersichtlich, dass derjenige Bereich der Referenzlinie 34, der das Abbild des Referenzbalkens 13 schneidet, in allen drei in **Fig. 2a, 2b, 2c** dargestellten Flächenbildern 31 annähernd die selbe Schnittbreite hat, während die Schnittbreite desjenigen Bereichs der Referenzlinie 34, die das Abbild 32 des Messbalkens 12 schneidet, von der jeweiligen Position der Detektoreinheit 1 abhängig ist.

In **Fig. 3** sind drei Helligkeitsprofile 22a, 22b, 22c dargestellt, die aus den Helligkeitswerten, der auf der Referenzlinie 34 befindlichen Pixel 36, erstellt sind, wobei die durchgezogene Linie demjenigen Helligkeitsprofil 22a entspricht, das aus den Helligkeitswerten der auf der Referenzlinie 34 befindlichen Pixel 36 des in **Fig. 2a** dargestellten Flächenbildes, erstellt ist. Punktiert bzw. strichliert dargestellt sind die beiden Helligkeitsprofile 22b, 22c, die aufgrund der in den **Fig. 2b** und **Fig. 2c** dargestellten Flächenbildern 31, erstellt worden sind.

Bei der Erstellung der Flächenbilder 31 der **Fig. 2a, 2b, 2c** wurde der die Abbilder erstellende Flächenbildsensor 3 der Detektoreinheit 1 in Richtung der Achse 16 bzw. entlang der längeren Kante des Referenzbalkens 13 bewegt. Eine Bewegung des Flächenbildsensors 3 von dem Positionierungselement 10 weg oder auf dieses zu oder eine Drehung des Flächenbildsensors 3 um eine Achse normal zur Ebene des Positionierungselements 10 würde eine Drehung oder Stauchung, allenfalls eine Verschiebung des jeweiligen Helligkeitsprofil 22; 22a, 22b, 22c bewirken.

Das ermittelte Helligkeitsprofil 22a, 22b, 22c wird nunmehr auf das Vorliegen von sprungartigen Helligkeitsveränderungen 24, 25 untersucht, wobei im Falle von sprungartigen Helligkeitsänderungen 24, 25 im Helligkeitsprofil 22; 22a, 22b, 22c angenommen wird, dass die Referenzlinie 34 jeweils beide Abbilder 32, 33 des Messbalkens 12 oder des Referenzbalkens 13 schneidet. Unter einem Sprung 24, 25 wird im vorliegenden Fall das Überschreiten oder Unterschreiten eines vorgegebenen Schwellenwerts durch den jeweiligen Helligkeitswert angesehen. Liegt beispielsweise der Helligkeitswert in einem Pixel 36 unterhalb dieses Schwellenwerts und in unmittelbar benachbarten Pixel 36 oberhalb des Schwellenwerts, so wird in einem der beiden Pixel 36 oder diesen ein Sprung 24, 25 detektiert.

In **Fig. 3** sind zudem die ermittelten Abstände zwischen den einzelnen Sprüngen 24, 25 der Helligkeitsprofile 22a, 22b, 22c dargestellt. Der Abstand zwischen den beiden Sprüngen 25, die aus dem Schnitt des Abbilds 33 des Referenzbalkens 13 mit der Referenzlinie 34 resultieren, beträgt im vorliegenden Fall eine Anzahl von nr Pixeln 36. Der Abstand zwischen diesen beiden Sprüngen 25 wird dem Abbild 33 des Referenzbalkens 13 als Profilbreite nr zugeordnet. Ebenso wird die Profilbreite $nm_a$ des Abbilds 32 des Messbalkens 12 bestimmt, indem diejenigen Sprünge 24 ermittelt werden, die vom Schnitt des Abbilds 32 des Messbalkens 12 mit der Referenzlinie 34 herrühren. Die Profilbreite $nm_a$ wird dem Messbalken 12 bzw. dessen Abbild 32 zugeordnet. Die Profilbreite $nm_a$ variiert im vorliegenden Fall mit der jeweiligen Relativposition zwischen der Detektoreinheit 1 und dem Positionierungselement 10.

Befindet sich die Detektoreinheit im linken Bereich der beiden Balken 12, 13, so wird ein Flächenbild, wie in **Fig. 2b** dargestellt, erstellt. Beim Schnitt der Referenzlinie 34 mit den beiden Abbildern 32, 33 der aufgenommenen Balken 12, 13 ergibt sich ein Helligkeitsprofil 22b, wie in **Fig. 3** dargestellt, wobei die Profilbreite $nm_b$ im Vergleich am geringsten ist.

Befindet sich die Detektoreinheit im rechten Bereich der beiden Balken 12, 13, so wird ein Flächenbild, wie in **Fig. 2c** dargestellt, erstellt. Beim Schnitt der Referenzlinie 34 mit den beiden Abbildern 32, 33 der aufgenommenen Balken 12, 13 ergibt sich ein Helligkeitsprofil 22c, wie in **Fig. 3** dargestellt, wobei die Profilbreite $nm_c$ im Vergleich am größten ist.

Durch Verschieben des Flächenbildsensors 3 in Richtung der Achse 16 werden bei jeweils gleicher Profilbreite nr des Abbilds 33 des Referenzbalkens 13 jeweils unterschiedliche Profilbreiten $nm_a$, $nm_b$, $nm_c$ des Abbilds 32 des Messbalkens 12 erzielt und ermittelt, wobei die jeweilige Profilbreite $nm_a$, $nm_b$, $nm_c$ abhängig von der jeweiligen Positionierung der Detektoreinheit 1 gegenüber dem Positionierungselement 10 in Richtung der Achse 16 ist. Sofern in sämtlichen Bildern das Abbild 33 des Referenzbalkens 13 jeweils die selbe Profilbreite nr aufweist, stellt die Profilbreite $nm_a$, $nm_b$, $nm_c$ des jeweiligen Messbalkens 12 ein Maß M für die Relativposition der Detektoreinheit 1 gegenüber dem Positionierungselement 10 dar. Wird hingegen die Detektoreinheit 1 vom Positionierungselement 10 weiter beabstandet, beispielsweise um mehrere Zentimeter, vom Positionierungselement 10 entfernt, so werden die beiden Abbilder 32, 33 des Referenzbalkens 13 sowie des Messbalkens 12 jeweils proportional verkleinert. Entsprechend werden bei weiterer Annäherung die Abbilder 32, 33 der beiden Balken 12, 13 entsprechend vergrößert. Um zu vermeiden, dass sich der Abstand der Detektoreinheit 1 gegenüber dem Positionierungselement 10 auf die Bestimmung der Relativposition in Richtung der Achse 16 auswirkt, wird das Verhältnis zwischen der Profilbreite nm; $nm_a$, $nm_b$, $nm_c$ des Abbildes 32 des Messbalkens 12 und der Profilbreite nr des Abbildes 33 des Referenzbalkens 13 ermittelt. Dieses Verhältnis nm/nr wird anschließend für die Relativposition M der Detektoreinheit 1 gegenüber dem Positionierungselement 10 zur Verfügung gehalten. Mit diesem Vorgehen kann vorteilhaft die Relativposition der Detektoreinheit in Richtung der Achse 16 ermittelt werden, die parallel zu den langen Kanten des Referenzbalkens 13 und gegebenenfalls zu einer der langen Kanten des Messbalkens 12 liegt. Weitere Komponenten der Relativposition, insbesondere der Abstand der Detektoreinheit 1 vom Positionierungselement 10 oder eine Verschiebung der Detektoreinheit 1 gegenüber dem Positionierungselement 10 normal zur Achse 16 und parallel zur Positionierungseinheit, werden bei der vorliegenden Ausführungsform nicht berücksichtigt.

In **Fig. 4** ist vorteilhaft, das Vorgehen bei der Ermittlung der jeweiligen Relativposition der Detektoreinheit 1 gegenüber dem Positionierungselement 10 dargestellt. Im vorliegenden Fall wird als Detektoreinheit 1 ein Mobiltelefon 1a mit einem Display 17 und einer Kamera als Flächenbildsensor 3 verwendet, auf dem eine speziell an das vorliegende Verfahren abgestimmte Softwareapplikation abläuft. Dieser Softwareapplikation werden laufend die von der Kamera des Mobiltelefons 1a aufgenommenen Flächenbilder 31 zugeführt, die Softwareapplikation legt vor der Bestimmung des Maßes M für die Relativposition eine Referenzlinie 34 im Bezug auf das Flächenbild 31 fest. Die Geometrie der Referenzlinie 34 bleibt für sämtliche der Softwareapplikation zugeführten Flächenbilder 31 unverändert. Die in diesem Ausführungsbeispiel verwendete Softwareapplikation bestimmt ein Maß M für die Relativposition der Detektoreinheit 1 gegenüber dem Positionierungselement 10 zu vorgegebenen Zeitpunkten, im vorliegenden Fall laufend in konstanten Abständen. Das jeweils ermittelte Maß M für die Relativposition wird nach der Ermittlung auf dem Display 17 des Mobiltelefons 1a angezeigt, wie in **Fig. 4** schematisch dargestellt ist. Wird das Mobiltelefon 1a gegenüber dem Positionierungselement 10 bewegt, so kann unmittelbar bei der Bewegung des Mobiltelefons 1a gegenüber dem Positionierungselement 10 in Richtung der Achse 16 die Änderung des ermittelten Maßes M für die Relativposition vom Benutzer des Mobiltelefons 1a auf dem Display 17 verfolgt werden. Somit ist es möglich, durch die Verschiebung des Mobiltelefons 1a in Richtung der Achse 16 gegenüber dem Positionierungselement 10 ein Maß M einzustellen und dieses Maß M im Mobiltelefon 1a zur weiteren Verwendung zur Verfügung zu haben.

Im vorliegenden Fall wird die Referenzlinie 34 parallel zu einer der Bildachsen angeordnet. Das Mobiltelefon 1a bzw. dessen Flächenbildsensor 3 wird dabei so gegenüber dem Positionierungselement 10 gehalten, dass die Abbilder 32, 33 der Balken 12, 13 bzw. die Abbilder der langen Kanten der Balken 12, 13 annähernd im rechten Winkel zur Referenzlinie 34 liegen. Hierdurch wird sichergestellt, dass sich beim Schnitt zwischen der Referenzlinie mit den Abbildern der Balken definierte und scharfe Sprünge 24, 25 ergeben, aus denen jeweils auf einfache Art eine Profilbreite des Messbalkens bzw. Referenzbalkens ermittelt werden kann.

Um die Abbilder 32, 33 des Messbalkens 12 und des Referenzbalkens 13 voneinander unterscheiden zu können, besteht die vorteilhafte Möglichkeit, die minimale Dicke des Messbalkens 12 größer oder gleich der Dicke des Referenzbalkens 13 zu wählen. Dies kann bei allen Ausführungsbeispielen der Erfindung vorteilhaft vorgenommen werden. Hierbei werden zunächst die einzelnen Sprünge 24, 25 im Helligkeitsprofil 22; 22a, 22b, 22c detektiert, wobei jedem der Sprünge 24, 25 jeweils ein Koordinatenwert im Bezug auf ein Koordinatensystem zugeordnet wird, dessen einzige Koordinatenrichtung auf der Referenzlinie 34 liegt. Das Koordinatensystem wird somit im Bezug auf die Referenzlinie 34 festgelegt. Bei der Sprungdetektion 24, 25 erhält man insgesamt vier Sprünge mit numerisch unterschiedlichen Koordinatenwerten, wobei bei Vorhandensein von vier Sprüngen 24, 25 jeweils die beiden Sprünge 24, 25 mit den numerisch geringeren Koordinatenwerten einem der Balken 12, 13 und/oder dessen Abbild 32, 33 zugeordnet werden und die beiden Sprünge 24, 25 mit dem numerisch größeren Koordinatenwerten, dem jeweils anderen Balken 12, 13 und/oder dessen Abbild 32, 33 zugeordnet werden.

Um nun die beiden Paare von Sprüngen 24, 25 voneinander zu unterscheiden und festzustellen, welche der Sprünge 24, 25 dem Messbalken 12 und welche der Sprünge 24, 25 dem Referenzbalken 13 zugehören, kann nunmehr unter der Zugrundelegung der vorstehend genannten Merkmale der Balken 12, 13 im Bezug auf Ihre Dicke angenommen werden, dass als Referenzbalken 13 derjenige Balken 12, 13 oder dessen Abbild 32, 33 mit der jeweils geringeren Profilbreite angesehen wird. Da der Referenzbalken 13 an jeder Position dünner ist, als der Messbalken, kann der jeweils geringere Profilbreite nr dem Referenzbalken 13 und die jeweils größere Profilbreite nm dem Messbalken 12 zugeordnet werden.

In **Fig. 5** ist eine Detektoreinheit 1 dargestellt, mit der das vorstehend beschriebene Verfahren durchgeführt wird. Die Detektoreinheit 1 weist einen Flächenbildsensor 3 auf, der zu vorgegebenen Zeitpunkten, insbesondere vorgegebenen einstellbaren Zeitintervallen jeweils Flächenbilder 31 liefert. Die Erstellung von Flächenbildern 31 durch den Flächenbildsensor 3 wird von einer Triggereinheit 47 gesteuert.

Diese Flächenbilder 31 sind einer Verarbeitungseinheit 40 zugeführt. Die Verarbeitungseinheit 40 umfasst eine Profilbestimmungseinheit 41, eine Sprungdetektoreinheit 42, eine Breitenbestimmungseinheit 43, sowie eine Positionsbestimmungseinheit 44. Die bei der Verarbeitungseinheit 40 einlangenden Flächenbilder 31 werden der Profilbestimmungseinheit 41 zugeführt. Die Profilbestimmungseinheit 41 ermittelt mit den in **Fig. 2a** dargestellten vorgehen anhand einer Referenzlinie 34 ein Helligkeitsprofil 22.

Dieses Helligkeitsprofil 22 wird der der Profilbestimmungseinheit 41 nachgeschalteten Sprungsdetektoreinheit 42 zugeführt. Das Helligkeitsprofil 22 wird von der Sprungdetektoreinheit 42 auf das Vorhandensein von Sprüngen 24, 25 untersucht. Die Position der einzelnen Sprünge 24, 25 werden im Bezug auf ein vorgegebenes Koordinatensystem ermittelt und an die Breitenbestimmungseinheit 43 weitergeleitet.

Die Breitenbestimmungseinheit 43, der die einzelnen Koordinatenwerte bzw. Positionen der Sprünge 24, 25 zugeführt sind, bestimmt ausgehend von den Positionen bzw. von den Koordinatenwerten der Sprünge 24, 25 die jeweilige Profilbreite der Abbilder 32, 33 der Balken 12, 13. Hierbei bestimmt die Breitenbestimmungseinheit 43 zudem, welche der Sprünge 24, 25 jeweils dem Messbalken 12 und welche der Sprünge 24, 25 dem Referenzbalkens 13 zugeordnet werden. Die jeweiligen Profilbreiten des Messbalkens 12 und des Referenzbalkens 13 werden der Positionsbestimmungseinheit 44 zugeführt.

Die Positionsbestimmungseinheit 44 ermittelt ein Maß für die Relativposition der Detektoreinheit gegenüber dem Positionierungselement 10 in Form eines Verhältnisses zwischen der Profilbreite nm des Abbilds 32 des Messbalkens 12 und der Profilbreite nr des Abbilds 33 des Referenzbalkens 13. Im vorliegenden Ausführungsbeispiel wird dieses Maß M an ein in der Detektoreinheit 1 befindliches Display 17 übertragen und von diesem zur Anzeige gebracht.

In einem alternativen **zweiten Ausführungsbeispiel** der Erfindung, das im übrigen dem ersten Ausführungsbeispiel der Erfindung entspricht, wird die Referenzlinie 34 auch für jedes einzelne Flächenbild 34 in der jeweiligen Profilbestimmungseinheit 41 separat bestimmt, wobei hierbei die Lage und Ausrichtung des Abbilds 33 des Referenzbalkens 13 im Flächenbild 31 detektiert wird und die Referenzlinie 34 normal zur Ausrichtung des Abbilds 33 des Referenzbalkens 13 gewählt wird. Die Referenzlinie 34 verläuft hierbei wiederum vorteilhafterweise durch den Mittepunkt 35 des Flächenbilds 31 oder durch einen sonstigen, vorab festgelegten Bildpunkt des Flächenbilds 31.

In den **Fig. 6, 7 und 8** ist ein **drittes Ausfüh-** **rungsbeispiel** der Erfindung näher dargestellt. In **Fig. 6** ist ein von einem Flächenbildsensor 3 erstelltes Flächenbild 31 dargestellt, auf dem ein Teilbereich des Positionierungselements 10 abgebildet ist. In Bezug auf das Flächenbild 31 ist eine Referenzlinie 34 sowie eine Anzahl von vier weiteren Referenzlinien 34w, ..., 34z vorgegeben. Die einzelnen Pixel 36 der Referenzlinie 34, nicht jedoch die Pixel der weiteren Referenzlinien 34w, ..., 34z, sind in **Fig. 2a** dargestellt. Im vorliegenden Fall sind die Referenzlinien 34; 34w, ..., 34z derart gewählt, dass sie parallel zu der vertikalen Bildkante 39 verlaufen.

Der Abstand zwischen den Referenzlinien wird im folgenden Ausführungsbeispiel derart gewählt, dass diejenigen Linien auf dem Positionierungselement 10, die auf die einzelnen Referenzlinien und weiteren Referenzlinien abgebildet werden, einen Abstand von einigen Millimetern aufweisen. Hierdurch ergeben sich je nach Auflösung und Distanz zwischen der Detektoreinheit 1 und dem Positionierungselement 10 unterschiedliche Abstände der Referenzlinien in Pixeln.

Im Flächenbild 31 sind sowohl das Abbild 32 des Messbalkens 12, sowie das Abbild 33 des Referenzbalkens 13 zu sehen. Aus **Fig. 6** ist ersichtlich, dass sowohl die Referenzlinie 34 als auch sämtliche weiteren Referenzlinien 34w, ..., 34z sowohl den Messbalken 12 als auch den Referenzbalken 13 schneiden.

In **Fig. 7** ist das Helligkeitsprofil 22 dargestellt, das aus den Helligkeitswerten, der auf der Referenzlinie 34 befindlichen Pixel 36, erstellt ist, wobei die durchgezogene Linie demjenigen Helligkeitsprofil 22 entspricht, das aus den Helligkeitswerten der auf der Referenzlinie 34 befindlichen Pixel 36 des in **Fig. 6** dargestellten Flächenbildes 31, erstellt ist. Punktiert bzw. strichliert dargestellt sind die weiteren Helligkeitsprofile 22w, ... , 22z die aus den Helligkeitswerten auf jeweils einer der weiteren Referenzlinien 34w, ..., 34z befindlichen Pixel 36 des Flächenbilds 31 liegenden Pixeln 36 erstellt wurden.

Bei der Erstellung des Flächenbilds 31 liegen die Referenzlinie 34 sowie die weiteren Referenzlinien 34w, ..., 34z jeweils normal zu den beiden Kanten des Abbilds 33 des Referenzbalkens. Eine Bewegung des Flächenbildsensors 3 von dem Positionierungselement 10 weg oder auf dieses zu bewirkt eine Stauchung oder Dehnung der einzelnen Helligkeitsprofile 22; 22w, ..., 22z. Eine Drehung des Flächenbildsensors 3 um eine Achse normal zur Ebene des Positionierungselements 10 würde zu einer Verschiebung der Helligkeitsprofile 22; 22w, ..., 22z zueinander führen und zudem eine Drehung oder Stauchung der der Helligkeitsprofile 22; 22w, ..., 22z bewirken. Insgesamt kann das im ersten oder zweiten Ausführungsbeispiel der Erfindung dargestellte und für eine einzige Referenzlinie 34 und ein einziges Helligkeitsprofil 22 dargestellte Vorgehen für die weiteren Helligkeitsprofile 22w, ..., 22z übernommen werden. Für jedes der einzelnen weiteren Helligkeitsprofile 22w, ..., 22z wird jeweils separat ein weiteres Maß Mw, ..., Mz für die Relativposition, wie im ersten oder zweiten Ausführungsbeispiel dargestellt, ermittelt. Anschließend wird unter den einzelnen Maßen M; $M_w$, ..., $M_z$ ein Mittelwert ermittelt, der schließlich als präziseres Maß $M_m$ für die Relativposition der Detektoreinheit 1 zum Positionierungselement zur Verfügung steht.

Die einzelnen ermittelten Helligkeitsprofile 22; 22w, ... 22z werden nunmehr, wie bei der ersten und zweiten Ausführungsform der Erfindung, auf das Vorliegen von sprungartigen Helligkeitsveränderungen 24, 25 untersucht, wobei im Falle von sprungartigen Helligkeitsänderungen im Helligkeitsprofil 22; 22w, ... 22z angenommen wird, dass die jeweilige Referenzlinie 34 oder weitere Referenzlinie 34w, ... 34z jeweils beide Abbilder 32, 33 des Messbalkens 12 oder des Referenzbalkens 13 schneiden. Unter einem Sprung 24, 25 wird das Überschreiten oder Unterschreiten eines vorgegebenen Schwellenwerts durch den jeweiligen Helligkeitswert angesehen. Liegt beispielsweise der Helligkeitswert in einem Pixel 36 unterhalb dieses Schwellenwerts und in unmittelbar benachbarten Pixel 36 oberhalb des Schwellenwerts, so wird in einem der beiden Pixel 36 oder diesen ein Sprung 24, 25 detektiert.

In **Fig. 7** sind zudem die ermittelten Profilbreiten zwischen den einzelnen Sprüngen 24, 25 der Helligkeitsprofile 22; 22w, ... 22z dargestellt. Der Abstand zwischen den beiden Sprüngen 25, die aus dem Schnitt des Abbilds 33 des Referenzbalkens 13 mit der Referenzlinie 34 oder einer der weiteren Referenzlinien 34w, ..., 34z resultieren, beträgt im vorliegenden Fall eine Anzahl von $nr$; $nr_w$, ..., $nr_z$ Pixeln. Der Abstand zwischen diesen beiden Sprüngen 25 wird dem Abbild 33 des Referenzbalkens 13 als Profilbreite $nr_w$, ..., $nr_z$, gemessen unter Zuhilfenahme der jeweiligen Referenzlinie 34 oder weiteren Referenzlinie 34w, .., 34z, zugeordnet. Ebenso wird die jeweilige Profilbreite $nm$; $nm_w$, ..., $nm_z$ des Abbilds 32 des Messbalkens 12 bestimmt, indem diejenigen Sprünge 24; 24w ..., 24z ermittelt werden, die vom Schnitt des Abbilds 32 des Messbalkens 12 mit der jeweiligen Referenzlinie 34 oder weitere Referenzlinie 34w, ..., 34z herrühren. Die jeweilige Profilbreite $nm$; $nm_w$, ..., $nm_z$ wird dem Messbalken 12 bzw. dessen Abbild 32, gemessen unter Zuhilfenahme der jeweiligen Referenzlinie 34 oder weiteren Referenzlinie 34w, .., 34z, zugeordnet.

Das Verhältnis zwischen der Profilbreite $nm$; $nm_w$, ..., $nm_z$ des Abbildes 32 des Messbalkens 12 und der Profilbreite $nr$; $nr_w$, ..., $nr_z$ des Abbildes 33 des Referenzbalkens 13 wird für jede einzelne Referenzlinie 34 oder weitere Referenzlinie 34w, ..., 34z separat ermittelt. Für die Referenzlinie 34 ergibt sich das Maß $M=nm/nr$. Für die weiteren Referenzlinien 34w, ..., 34z ergibt sich das jeweiligen weitere Maß $M_w$, ..., $M_z$ jeweils wie folgt:

$$M_w = nm_w/nr_w \qquad M_x = nm_x/nr_x$$

$$M_y = nm_y/nr_y \qquad M_z = nm_z/nr_z$$

Durch Bildung eines Mittelwerts des Maßes M und der weiteren Maße $M_w$, ..., $M_z$ wird ein präziseres Maß $M_m$ ermittelt, wobei im vorliegenden Fall das präzisere Maß $M_m$ gemäß der folgenden Formel ermittelt wird:
$$M_m = (M + M_w + M_x + M_y + M_z)/5$$

Im vorliegenden Fall wurde die Ermittlung eines präziseren Maßes $M_m$ mit insgesamt fünf Referenzlinien 34; 34w, ..., 34z dargestellt. Selbstverständlich kann auch eine andere Anzahl von Referenzlinien 34 für die Ermittlung eines präziseren Maßes $M_m$ herangezogen werden. Typischerweise liegen alle weiteren Referenzlinien 34w, ..., 34z innerhalb eines Normalenabstands von ... Pixeln. Anstelle der einzelnen ermittelten Maße M, $M_w$, ..., $M_z$ wird das präzisere Maß als Maß für die Relativposition der Detektoreinheit 1 gegenüber dem Positionierungselement 10 zur Verfügung gehalten. Mit diesem Vorgehen kann die Relativposition der Detektoreinheit in Bezug auf die Achse 16 ermittelt werden, die parallel zu den langen Kanten des Referenzbalkens 13 und gegebenenfalls zu einer der langen Kanten des Messbalkens 12 liegt. Weitere Komponenten dieser Relativposition, insbesondere der Abstand der Detektoreinheit 1 vom Positionierungselement 10 oder eine Verschiebung der Detektoreinheit 1 gegenüber dem Positionierungselement 10 normal zur Achse 16, werden bei der vorliegenden Ausführungsform nicht berücksichtigt.

In **Fig. 8** ist schematisch der Aufbau einer Detektoreiheit 1 dargestellt. Die Detektoreinheit 1 weist einen Flächenbildsensor 3 auf, der zu vorgegebenen Zeitpunkten, insbesondere vorgegebenen einstellbaren Zeitintervallen jeweils Flächenbilder 31 liefert. Die Erstellung von Flächenbildern 31 durch den Flächenbildsensor 3 wird von einer Triggereinheit 47 gesteuert.

Diese Flächenbilder 31 sind einer Verarbeitungseinheiten 40 sowie einer Anzahl von weiteren Verarbeitungseinheiten 40w, ..., 40z zugeführt. Sämtliche Verarbeitungseinheiten 40; 40w, 40z weisen jeweils den Aufbau der in **Fig. 5** dargestellten Verarbeitungseinheit 40 auf, wobei jede der Verarbeitungseinheiten jeweils eine Profilbestimmungseinheit 41, eine Sprungdetektoreinheit 42, eine Breitenbestimmungseinheit 43, sowie eine Positionsbestimmungseinheit 44 umfasst. Die bei der Verarbeitungseinheit 40 oder einer der weiteren Verarbeitungseinheiten 40 w, ..., 40z einlangenden Flächenbilder 31 werden der jeweiligen Profilbestimmungseinheit 41 oder weiteren Profilbestimmungseinheit 41 w, ..., 41 z zugeführt.

Die Profilbestimmungseinheit 41 sowie die weiteren Profilbestimmungseinheiten 41w, ..., 41z ermitteln mit den in **Fig. 7** dargestellten vorgehen anhand einer Referenzlinie 34 oder anhand einer der weiteren Referenzlinien 34w, ..., 34z ein Helligkeitsprofil 22. Jede Profilbestimmungseinheit 41 und weitere Profilbestimmungseinheit 41w, ..., 41z bestimmt jeweils aufgrund einer ihr zugeordneten oder von ihr ermittelten Referenzlinie 34 oder weiteren Referenzlinie 34w, ..., 34z jeweils ein Helligkeitsprofil 22 oder weiteres Helligkeitsprofil 22w, ..., 22z.

Diese Helligkeitsprofile 22; 22w, ..., 22z werden jeweils der der jeweiligen Profilbestimmungseinheit 41; 41w, ..., 41 z nachgeschalteten Sprungsdetektoreinheit 42; 42w, ..., 42z zugeführt. Das jeweilige Helligkeitsprofil 22 oder weitere Helligkeitsprofil 22w, ..., 22z wird von der jeweiligen Sprungdetektoreinheit 42; 42w, ..., 42z auf das Vorhandensein von Sprüngen 24, 25 untersucht. Die Position der einzelnen Sprünge 24, 25 wird im Bezug auf ein vorgegebenes Koordinatensystem ermittelt und an die jeweils nachgeschaltete Breitenbestimmungseinheit 43; 43w, ..., 43z weitergeleitet. Die jeweilige Breitenbestimmungseinheit 43; 43w, ..., 43z der die einzelnen Koordinatenwerte bzw. Positionen der Sprünge 24, 25 zugeführt sind, bestimmt ausgehend von den Positionen bzw. von den Koordinatenwerten der Sprünge 24, 25 die jeweilige Profilbreite $nm_w$, $nr_w$, ... $nm_z$, $nr_z$, der Abbilder 32, 33 der Balken 12, 13. Hierbei bestimmt die jeweilige Breitenbestimmungseinheit 43; 43w, ..., 43z zudem, welche der Sprünge 24, 25 jeweils dem Messbalken 12 und welche der Sprünge 24, 25 dem Referenzbalkens 13 zugeordnet werden. Die jeweiligen Profilbreite $nm_w$, $nr_w$, ... $nm_z$, $nr_z$ des Messbalkens 12 und des Referenzbalkens 13 werden der jeweils nachgeschalteten Positionsbestimmungseinheit 44; 44w, ..., 44z zugeführt. Die jeweilige Positionsbestimmungseinheit 44 ermittelt das jeweilige Verhältnis $M_w$, ..., $M_z$ zwischen der Profilbreite $nm_w$, ..., $nm_z$ des Abbilds 32 des Messbalkens 12 und der Profilbreite $nr_w$, ..., $nr_z$ des Abbilds 33 des Referenzbalkens 13. Das so erhaltene Verhältnis dient als Maß $M_w$, ..., $M_z$ für die Relativposition der Detektoreinheit 1 gegenüber dem Positionierungselement 10. Die einzelnen Ausgänge der Verarbeitungseinheit 40 sowie der weiteren Verarbeitungseinheiten 40w, ..., 40z sind an die Eingänge einer Mittelwertbildungseinheit 5 angeschlossen. Diese Mittelwertbildungseinheit 5 ermittelt auf Grundlage der an ihren Eingängen vorliegenden und von den Verarbeitungseinheiten 40; 40w, ..., 40z abgegebenen Maße M; $M_w$, ..., $M_z$ ein präziseres Maß $M_m$ als Mittelwert der an ihrem Eingang anliegenden Maße M; $M_w$, ..., $M_z$. Dieses Maß $M_m$ wird an ein in der Detektoreinheit befindliches Display 17 übertragen und von diesem zur Anzeige gebracht.

Alternativ kann in einem **vierten Ausführungsbeispiel,** das im übrigen dem vorstehend dargestellten dritten Ausführungsbeispiel entspricht, die Wahl der Referenzlinie 34 sowie der weiteren Referenzlinien 34w, ..., 34z wie im zweiten Ausführungsbeispiel erfolgen. Hierfür wird die Referenzlinie 34 wie im zweiten Ausführungsbeispiel festgelegt, die Referenzlinie 34 wird normal zur einer langen Kante des Abbilds 33 des Referenzbalkens 13 gewählt, wobei diese durch den Mittelpunkt 35 oder einen anderen in Bezug auf das Flächenbild 31 angegebenen Punkt festgelegt wird. Die weiteren Referenzlinien 34w, ..., 34z werden so festgelegt, dass sie einen vorgegebenen Normalenabstand zur Referenzlinie 34 aufweisen.

Eine weitere besondere Fortbildung der Erfindung ist in einem **fünften Ausführungsbeispiel** der Erfindung unter Bezugnahme auf **Fig. 9** näher dargestellt. Hierbei weist die Detektoreinheit 1 eine NFC/RFID-Schnittstelle 6 zur Detektion einer vorgegebenen Kennung K des auf dem Positionierungselement 10 befindlichen NFC/RFID-Transponders, bestehend aus einem Transponderchip 14 und einer daran angeschlossenen Antenne 15, auf. Der Verarbeitungseinheit 40 oder deren Positionsbestimmungseinheit 44 ist eine Zuordnungseinheit 46 nachgeschaltet. Der Zuordnungseinheit 46 ist ferner die NFC/RFID-Schnittstelle 6 vorgeschaltet. Die Zuordnungseinheit 46 erhält somit sowohl einerseits die von der NFC/RFID-Schnittstelle 6 ermittelte Kennung K , die von dem Transponderchip 14 über die Antenne 15 **(Fig. 1)** auf die NFC/RFID-Schnittstelle 6 übertragen wird als auch das jeweilige Maß M für die Relativposition zwischen dem Detektor 1 und dem Positionierungselement 10. Bei Vorliegen eines Maßes M für die Relativposition sowie einer Kennung K werden das Maß M und die Kennung K einander zuordnet und als gemeinsamer Datensatz D abgespeichert und in der Zuordnungseinheit 46 bereitgehalten. Auf Anfrage oder auf Veranlassung der Zuordnungseinheit 46 wird der Datensatz D, gegebenenfalls auch das Maß M über eine Antenne 9 von der Detektoreinheit 1, im vorliegenden Fall drahtlos, auf einen nicht dargestellten Server übertragen.

Alternativ besteht auch die Möglichkeit, anstelle eines Transponderchips 14 sowie einer NFC/RFID-Schnittstelle 6 in der Detektoreinheit zur Speicherung der Kennung K einen auf das Positionierungselement aufgedruckten Code 14a zu verwenden. In den **Fig. 1a** und **Fig. 1b** werden jeweils ein Barcode und ein QR-Code verwendet. Alternativ können jedoch auch beliebige andere aufdruckbare Codes zur Darstellung der Kennung verwendet werden.

Bei der Erstellung des Abbilds des Positionierungselements 10 befindet sich der jeweilige Code 14a im Aufnahmebereich des Flächenbildsensors 3, der Codes 14a ist somit in dem vom Flächenbildsensor 3 erstellten Flächenbild 31 abgebildet und kann mittels einer Ausleseeinheit bestimmt werden.

Bei Vorliegen eines Maßes M für die Relativposition sowie einer Kennung K werden das Maß M und die Kennung K einander zuordnet und als gemeinsamer Datensatz D abgespeichert und in der Zuordnungseinheit 46 bereitgehalten. Auf Anfrage oder auf Veranlassung der Zuordnungseinheit 46 wird der Datensatz D, gegebenenfalls auch das Maß M über eine Antenne 9 von der Detektoreinheit 1, im vorliegenden Fall drahtlos, auf einen nicht dargestellten Server übertragen.

Eine in **Fig. 9** dargestellte Detektion der Kennung und Aufbereitung eines Datensatzes D ist selbstverständlich auch bei dem dritten und vierten Ausführungsbeispiel der Erfindung möglich. Diesfalls wird jeweils das präzisere durch Mittelwertbildung ermittelte Maß $M_m$ für die Relativposition gemeinsam mit der Kennung K in den Datensatz D aufgenommen und über die Antenne 9 zum Server übertragen.

Besonders gut geeignet ist die Erfindung für eine Anwendung bei einem Mobiltelefon 1a. Ein solches Mobiltelefon 1a ist mit einer integrierten Kamera ausgestattet, die als Flächenbildsensor 3 fungiert. Auf dem Mobiltelefon 1a läuft eine Softwareanwendung ab, die ein Maß $M_m$ für die Relativposition wie in einer der voranstehend beschriebenen Ausführungsformen bestimmt. Die vom Mobiltelefon 1a ausgeführte Softwareanwendung weist dabei die die Funktion der Verarbeitungseinheit 40 oder gegebenenfalls auch die Funktion der Verarbeitungseinheiten 40 sowie der Mittelwertbildungseinheit 5 auf. Allenfalls kann auch die Funktion der Triggereinheit 47 durch die Softwareanwendung realisiert sein.

**Patentansprüche**

1. Verfahren zur Bestimmung der Relativposition einer Detektoreinheit (1) gegenüber einem Positionierungselement (10),

   - wobei auf dem Positionierungselement (10) zwei Balken (12, 13), nämlich
   - ein Referenzbalken (13), der entlang einer vorgegebenen Achse ausgerichtet ist, wobei zumindest eine Eigenschaft des Referenzbalken (13) über den Verlauf des Referenzbalkens (13) unverändert ist, und
   - ein Messbalken (12) der entlang derselben Achse ausgerichtet ist, wobei zumindest eine Eigenschaft des Referenzbalken (13) über den Verlauf des Messbalkens (12) monoton ansteigt,
   - wobei die beiden Balken (12, 13) einander zumindest abschnittsweise gegenüberliegend ausgerichtet sind und sich vom Hintergrund des Positionierungselements (10) farblich und/oder in Bezug auf ihre Helligkeit unterscheiden,
   - wobei die Detektoreinheit (1) zur Bestimmung der eines Flächenbilds (31) ausgebildet ist und eine Anzahl von Sensorpixeln aufweist, welche die unterschiedliche Farbgebung und/oder Helligkeit zwischen dem Balken (12, 13) und dem Hintergrund des Positionierungselements (10) voneinander unterscheiden und als unterschiedliche Helligkeitswerte detektieren, **dadurch gekennzeichnet,**
   - **dass** die Detektoreinheit (1) gegenüber dem Positionierungselement (10) bei einer bestimmten Position positioniert wird,
   - **dass** mit der Detektoreinheit (1) ein Flächenbild (31) des Positionierungselements (10) erstellt wird, wobei auf dem Flächenbild (31) beide auf dem Positionierungselement (10) befindlichen, insbesondere aufgedruckten, Balken (12, 13) zumindest teilweise abgebildet sind,
   - **dass** in Bezug auf das Flächenbild (31) eine die Abbilder beider Balken (12, 13) schneidende Referenzlinie (34) festgelegt wird und aus den Helligkeitswerten der auf dieser Referenzlinie (34) liegenden Pixel (36) ein Helligkeitsprofil (22) erstellt wird,
   - **dass** jeweils auf der Referenzlinie jeweils eine Eigenschaft des Messbalkens (12) und eine Eigenschaft des Referenzbalkens (13) ermittelt werden, und
   - **dass** das Verhältnis zwischen der für den Messbalken (12) ermittelten Eigenschaft und der für den Referenzbalken (13) ermittelten Eigenschaft ermittelt und dieses Verhältnis als Maß (M) für die Relativposition zur Verfügung gehalten wird.

2. Verfahren nach Anspruch 1, **dadurch gekennzeichnet, dass**

   - der Referenzbalken (13) mit konstanter Dicke und der Messbalken (12) mit steigender, nach einer Richtung zunehmender Dicke mit vom Hintergrund des Positionierungselements (10) abweichender Farbgebung und/oder Helligkeit angeordnet sind, - dass die Detektoreinheit (1) zur Bestimmung eines Flächenbilds (31) ausgebildet ist und eine Anzahl von Sensorpixeln aufweist, welche die unterschiedliche Farbgebung und/oder Helligkeit zwischen dem Balken (12, 13) und dem Hintergrund des Positionierungselements (10) voneinander unterscheiden und als unterschiedliche Helligkeitswerte detektieren, - dass die Detektoreinheit (1) gegenüber dem Positionierungselement (10) bei einer bestimmten Position positioniert wird,
   - dass mit der Detektoreinheit (1) ein Flächenbild (31) des Positionierungselements (10) erstellt wird, wobei auf dem Flächenbild (31) beide auf dem Positionierungselement (10) befindlichen, insbesondere aufgedruckten, Balken (12, 13) zumindest teilweise abgebildet sind,
   - dass in Bezug auf das Flächenbild (31) eine die Abbilder beider Balken (12, 13) schneidende Referenzlinie (34) festgelegt wird und aus den Helligkeitswerten der auf dieser Referenzlinie (34) liegenden Pixel (36) ein Helligkeitsprofil (22) erstellt wird,
   - dass sprungartige Helligkeitsänderungen im Helligkeitsprofil (22) ermittelt werden und diese als Sprünge (24, 25) den Kanten der Balken (12, 13) zugeordnet werden,
   - dass für beide Balken jeweils diejenigen Sprünge im Helligkeitsprofil bestimmt werden, die vom jeweiligen Balken (12, 13) herrühren, und für jeden der Balken (12, 13) der Abstand der jeweiligen von ihm herrührenden Sprünge (24, 25) ermittelt und dem jeweiligen Balken (12, 13) als Profilbreite (nm, nr) zugeordnet wird, und
   - dass das Verhältnis zwischen der Profilbreite (nm) des Messbalkens (12) und der Profilbreite (nr) des Referenzbalkens (13) ermittelt wird und dieses Verhältnis als Maß (M) für die Relativposition zur Verfügung gehalten wird.

3. Verfahren nach Anspruch 1 oder 2, **dadurch gekennzeichnet, dass** bei der Bestimmung der Profilbreiten (nm, nr) der Balken (12, 13) jeweils zwei von jedem der beiden Balken (12, 13) herrührende Sprünge (24, 25) im Helligkeitsprofil (22) detektiert werden, wobei für jeden der Sprünge (24, 25) jeweils ein Koordinatenwert in Bezug auf ein vorgegebenes auf die Referenzlinie (34) bezogenes Koordinatensystem detektiert wird, von denen die beiden Sprünge (24, 25) mit den numerisch geringeren Koordinatenwerten einem der Balken (12, 13) zugeordnet werden und die beiden übrigen Sprünge (24, 25) dem jeweils anderen Balken (12, 13) zugeordnet werden und für jeden der Balken (12, 13) jeweils seine Profilbreite (nm, nr) als Differenz der Koordinatenwerte der diesem Balken (12, 13) zugeordneten Sprünge (24, 25) ermittelt wird und die so ermittelte Profilbreite (nm, nr) dem jeweiligen Balken (12, 13) zugeordnet wird.

4. Verfahren nach einem der vorangehenden Ansprüche, **dadurch gekennzeichnet,**

   - **dass** die minimale Dicke des Messbalkens (12) größer oder gleich der Dicke des Referenzbalkens (13) ist, und dass dasjenige Abbild (32, 33) eines Balkens (12, 13) im Flächenbild (31) mit der geringeren Profilbreite (nm, nr) als Abbild (33) des Referenzbalkens (13) detektiert wird und das jeweils andere Abbild (32, 33) eines Balkens mit der jeweils größeren Profilbreite als Abbild (32) des Messbalkens (12) detektiert wird, und/oder

   - **dass** das aufgenommene Flächenbild (31) und die Referenzlinie (34) so gewählt werden, dass sich beim Schnitt zwischen der Referenzlinie (34) mit den Abbildern (32, 33) der Balken (12, 13) zwei unterschiedlich lange Profilbreiten (nm, nr) der Balken (12, 13) ergeben, und/oder

   - **dass** die Referenzlinie (34) parallel zu einer Bildachse des Flächenbilds (31) gewählt wird und vorzugsweise durch den Mittelpunkt (35) des Flächenbilds (31) verläuft und/oder

   - **dass** die Lage und Ausrichtung des Abbilds (33) des Referenzbalkens (13) im Flächenbild (31) detektiert wird und die Referenzlinie (34) normal zur Ausrichtung des Abbilds (33) des Referenzbalkens (13) gewählt wird, wobei die Referenzlinie (34) vorzugsweise durch den Mittelpunkt (35) des Flächenbilds (31) verläuft, und/oder

   - **dass** die Relativposition der Detektoreinheit (1) gegenüber dem Positionierungselement (10) zu vorgegeben Zeitpunkten, insbesondere in vorgegebenen Zeitintervallen oder laufend, bestimmt wird, und/oder

   - **dass** die jeweils ermittelte Relativposition der Detektoreinheit (1) gegenüber dem Positionierungselement (10), insbesondere auf einem Display (17) auf der Detektoreinheit (1), angezeigt wird, und/oder

   - **dass** die Referenzlinie (34) vorab in Bezug auf das Flächenbild (31) festgelegt wird und für die einzelnen aufeinander folgenden Positionsbestimmungen in Bezug auf das jeweilige Flächenbild (31) unverändert bleibt.

5. Verfahren nach einem der vorangehenden Ansprüche, **dadurch gekennzeichnet, dass** eine Anzahl parallel zur Referenzlinie (34) verlaufender weiterer Referenzlinien (34w...34z) gewählt werden, wobei für jede der weiteren Referenzlinien (34w...34z) gesondert

   - aus den Helligkeitswerten der auf der jeweiligen weiteren Referenzlinie (34w...34z) liegenden Pixel (36) ein weiteres Helligkeitsprofil (22w...22z) erstellt wird,

   - dass sprungartige Helligkeitsänderungen (24, 25) im jeweiligen weiteren Helligkeitsprofil (22w...22z) ermittelt werden und diese als weitere Sprünge (24, 25) den Kanten der Balken (12, 13) zugeordnet werden,
   - dass für beide Balken (12, 13) jeweils diejenigen weiteren Sprünge (24, 25) im weiteren Helligkeitsprofil (22w...22z) bestimmt werden, die vom jeweiligen Balken (12, 13) herrühren, und für jeden der Balken (12, 13) der Abstand der jeweiligen von ihm herrührenden Sprünge (24, 25) ermittelt und dem jeweiligen Balken (12, 13) als weitere Profilbreite $(nm_w, nr_w,...nm_z, nr_z)$ zugeordnet wird, und
   - dass ein weiteres Verhältnis zwischen der weiteren Profilbreite des Messbalkens und der weiteren Profilbreite des Referenzbalkens ermittelt wird und dieses weitere Verhältnis als weiteres Maß (Mw...Mz) für die Relativposition zur Verfügung gehalten wird, und

   - dass durch Mittelwertbildung sämtlicher der Referenzlinie (34) und den weiteren Referenzlinien (34w...34z) zugeordneter Maße und weiteren Maße (M, Mw...Mz) für die Relativposition ein mittleres Maß (Mm) für die Relativposition ermittelt und zur Verfügung gehalten wird.

6. Verfahren nach einem der vorangehenden Ansprüche, **dadurch gekennzeichnet,**

- **dass** ein Mobiltelefon (1a) als Detektoreinheit (1) herangezogen wird, wobei das Flächenbild (31) von einer im Mobiltelefon (1a) integrierten Flächenbildsensor (3) in Form einer Kamera aufgenommen wird und wobei die Auswertung des Flächenbildes (31) sowie die Bestimmung des Maßes für die Relativposition nach einem der vorangehenden Ansprüche von einem dem Flächenbildsensor (3) nachgeschalteten Verarbeitungseinheit des Mobiltelefons (1a) vorgenommen wird, und/oder

- **dass** auf dem Positionierungselement (10) ein Transponderchip (14) und eine Antenne (15) angeordnet sind, und auf dem Transponderchip (14) eine Kennung abgespeichert ist, **dadurch gekennzeichnet, dass** die Detektoreinheit (1), insbesondere mittels einer NFC/RFID-Schnittstelle, die im Transponderchip (14) abgespeicherte Kennung abfragt und die Kennung dem jeweiligen Maß (M) für die Relativposition zuordnet und das Maß (M) sowie die Kennung (K) als gemeinsamen Datensatz zur Verfügung hält, und/oder

- dass auf dem Positionierungselement (10) ein Code (14a), insbesondere ein Barcode oder ein QR-Code, aufgedruckt ist, der eine Kennung (K) in codierter Form enthält, wobei im Zuge der Ermittlung des Maßes (M) jeweils der Code (14a) eingelesen und die darin enthaltene Kennung (K) ermittelt wird, und die Detektoreinheit die Kennung dem jeweiligen Maß (M) für die Relativposition zuordnet und das Maß (M) sowie die Kennung (K) als gemeinsamen Datensatz zur Verfügung hält, und/oder

- dass die ermittelte Relativposition, insbesondere über ein drahtloses Netzwerk, an einen Server übertragen und von diesem abgespeichert zur Verfügung gehalten wird.

7. Detektoreinheit (1) zur Bestimmung ihrer Relativposition relativ zu einem Positionierungselement (10),

- wobei auf dem Positionierungselement (10) zwei Balken (12, 13), nämlich

- ein Referenzbalken (13), der entlang einer vorgegebenen Achse ausgerichtet ist, wobei zumindest eine Eigenschaft des Referenzbalken (13) über den Verlauf des Referenzbalkens (13) unverändert ist, und

- ein Messbalken (12) der entlang derselben Achse ausgerichtet ist, wobei zumindest eine Eigenschaft des Referenzbalken (13) über den Verlauf des Messbalkens (12) monoton ansteigt,

- wobei die beiden Balken (12, 13) einander zumindest abschnittsweise gegenüberliegend ausgerichtet sind und sich vom Hintergrund des Positionierungselements (10) farblich und/oder in Bezug auf ihre Helligkeit unterscheiden, **dadurch gekennzeichnet, dass**

dem Flächenbildsensor (3) eine Verarbeitungseinheit (40) zur Verarbeitung eines vom Positionierungselement erstellten Flächenbilds (31) nachgeschaltet ist,

- dass die Verarbeitungseinheit (40) eine Profilbestimmungseinheit (41) aufweist, die die Helligkeitswerte von auf einer Referenzlinie (34) liegenden Pixeln (36) heranzieht und zu einem Helligkeitsprofil (22) zusammenfügt,

- dass die Verarbeitungseinheit (40) eine der Profilbestimmungseinheit (41) nachgeschaltete Detektoreinheit (42) aufweist, die jeweils die jeweilige Eigenschaft des des Abbilds Messbalkens (12) sowie des Abbilds des Referenzbalkens (13) im Bereich der Referenzlinie (34) ermittelt

- dass die Verarbeitungseinheit (40) eine der Breitenbestimmungseinheit (43) nachgeschaltete Positionsbestimmungseinheit (44) aufweist, die das Verhältnis zwischen der ermittelten Eigenschaft des Messbalkens (12) und der ermittelten Eigenschaft des Referenzbalkens (13) ermittelt und dieses Verhältnis als Maß (M) für die Relativposition der Detektoreinheit (1) gegenüber dem Positionierungselement (10) zur Verfügung hält.

8. Detektoreinheit nach Anspruch 7 zur Bestimmung ihrer Relativposition relativ zu einem Positionierungselement (10) mit zwei auf ihm befindlichen Balken (12, 13), nämlich einen Referenzbalken (13) mit konstanter Dicke und einen Messbalken (12) mit steigender, nach einer Richtung zunehmender Dicke mit vom Hintergrund des Positionierungselements (10) abweichender Farbgebung angeordnet ist, wobei die beiden Balken (12, 13) einander zumindest abschnittsweise gegenüber liegen, **dadurch gekennzeichnet, dass**

- dem Flächenbildsensor (3) eine Verarbeitungseinheit (40) zur Verarbeitung eines vom Positionierungselement erstellten Flächenbilds (31) nachgeschaltet ist,

- dass die Verarbeitungseinheit (40) eine Profilbestimmungseinheit (41) aufweist, die die Helligkeitswerte von auf einer Referenzlinie (34) liegenden Pixeln (36) heranzieht und zu einem Helligkeitsprofil (22) zusammenfügt,

- dass die Verarbeitungseinheit (40) eine der Profilbestimmungseinheit (41) nachgeschaltete Sprungdetektoreinheit (42) aufweist, die sprungartige Helligkeitsänderungen im Helligkeitsprofil (22) ermittelt und die so detektierten Sprünge (24, 25) den Kanten der Balken (12, 13) zuordnet,

- dass die Verarbeitungseinheit (40) eine der Sprungdetektoreinheit (42) nachgeschaltete Breitenbestimmungseinheit (43) aufweist, die jeweils den Abstand zwischen denjenigen Sprüngen (24, 25) im Helligkeitsprofil (22) bestimmt, die von den Abbildern (32, 33) der jeweiligen Balken (12, 13) herrühren, und diesen Abstand dem jeweiligen Balken (12, 13) als Profilbreite (nm, nr) zuordnet,

- dass die Verarbeitungseinheit (40) eine der Breitenbestimmungseinheit (43) nachgeschaltete Positionsbestimmungseinheit (44) aufweist, die das Verhältnis zwischen der Profilbreite (nm) des Messbalkens (12) und der Profilbreite (nr) des Referenzbalkens (13) ermittelt und dieses Verhältnis als Maß (M) für die Relativposition der Detektoreinheit (1) gegenüber dem Positionierungselement (10) zur Verfügung hält.

9. Detektoreinheit (1) nach Anspruch 7 oder 8, **dadurch gekennzeichnet, dass** die Sprungdetektoreinheit (42) die vier markantesten Sprünge (24, 25) im Helligkeitsprofil (22) detektiert, für jeden der Sprünge (24, 25) jeweils einen Koordinatenwert detektiert und die beiden Sprünge (24, 25) mit den geringeren Koordinatenwerten einem der Balken (12, 13) zuordnet und die beiden übrigen Sprünge (24, 25) dem jeweils anderen Balken (12, 13) zuordnet, und für jeden der Balken (12, 13) jeweils seine Profilbreite (nm, nr) als Differenz der Koordinatenwerte der diesem Balken zugeordneten Sprünge (24, 25) ermittelt und die Profilbreite (nm, nr) dem jeweiligen Balken (12, 13) zuordnet, und/oder

- dass die Breitenbestimmungseinheit (43) den Balken (12, 13) mit der geringeren Profilbreite (nr) als Referenzbalken (13) detektiert und den jeweils anderen Balken (12, 13) mit der größeren Profilbreite (nm) als Messbalken (12) detektiert, und/oder
- dass die Referenzlinie (34) parallel zu einer Bildachse des Flächenbilds (31) verläuft, und dass diese insbesondere durch den Mittelpunkt (35) des vom Flächenbildsensor (3) erstellten Flächenbilds (31) verläuft und/oder
- dass die Profilbestimmungseinheit (41) die Lage und Ausrichtung des Abbilds (33) des Referenzbalkens (13) im Flächenbild (31) detektiert und die Referenzlinie (34) normal zur Ausrichtung des Referenzbalkens (13) vorgibt, wobei die Referenzlinie (34) insbesondere durch den Mittelpunkt (35) des Flächenbilds (31) verläuft.

10. Detektoreinheit (1) nach einem der Ansprüche 7 bis 9 **gekennzeichnet durch** eine Vielzahl von weiteren Verarbeitungseinheiten (40w...40z),

- wobei jede weitere Verarbeitungseinheit (40w...40z) eine weitere Profilbestimmungseinheit (41w...41z) aufweist, die die Helligkeitswerte von auf einer Referenzlinie (34) liegenden Pixeln (36) heranzieht und zu jeweils einem weiteren Helligkeitsprofil (22w...22z) zusammenfügt,

- wobei jede weitere Verarbeitungseinheit (40w...40z) eine der weiteren Profilbestimmungseinheit (41w...41z) nachgeschaltete weitere Sprungdetektoreinheit (42w...42z) aufweist, die sprungartige Helligkeitsänderungen im jeweiligen Helligkeitsprofil (22w...22z) ermittelt und diese Sprünge (24, 25) den Kanten der Balken (12, 13) zuordnet,
- wobei jede weitere Verarbeitungseinheit (40w...40z) eine der weiteren Sprungdetektoreinheit (41w...41z) nachgeschaltete weitere Breitenbestimmungseinheit (42w...42z) aufweist, die jeweils den Abstand zwischen denjenigen Sprüngen (24, 25) im jeweiligen Helligkeitsprofil (22w...22z) bestimmt, die von den Abbildungen (32, 33) desselben Balkens (12, 13) herrühren und diesen Abstand dem jeweiligen Balken (12, 13) als weitere Profilbreite ($nm_w$, $nr_w...nm_z$, $nr_z$) zuordnet, und
- wobei jede weitere Verarbeitungseinheit (40w...40z) eine der weiteren Breitenbestimmungseinheit (42w...42z) nachgeschaltete weitere Positionsbestimmungseinheit (44w...44z) aufweist, die das Verhältnis zwischen der Profilbreite ($nm_w...nm_z$) des Messbalkens (12) und der Profilbreite ($nr_w...nr_z$) des Referenzbalkens (13) ermittelt und dieses Verhältnis als Maß für die Relativposition zur Verfügung hält,
- wobei der Verarbeitungseinheit (40) und den weiteren Verarbeitungseinheiten (40w...40z) eine Mittelwertbildungseinheit (5) nachgeschaltet ist, der die am Ausgang der Positionsbestimmungseinheit (44) sowie der weiteren Positionsbestimmungseinheiten (44w...44z) anliegenden Maße zugeführt sind, und die **durch** Mittelwertbildung sämtlicher der Referenzlinie (34) und den weiteren Referenzlinien (34w...34z) zugeordneter Maße (M, Mw, Mz) für die Relativposition eine mittlere Relativposition ermittelt und zur Verfügung hält.

11. Detektoreinheit nach einem der Ansprüche 7 bis 10, **dadurch gekennzeichnet, dass** ein der Positionsbestimmungseinheit (44) oder der Mittelwertbestimmungseinheit (5) nachgeschaltetes Display (17) vorgesehen ist, das die jeweils ermittelte Position, insbesondere unmittelbar nach ihrer Ermittlung anzeigt, und/oder

- dass die Detektoreinheit (1) eine NFC/RFID-Schnittstelle (6) aufweist zur Detektion einer vorgegebenen Kennung eines auf einem Positionierungselement (10) befindlichen Transponderchips (14), wobei der Positionsbestimmungseinheit (44) oder der Mittelwertbestimmungseinheit (5) eine der NFC/RFID-Schnittstelle nachgeschaltete Zuordnungseinheit (46) nachgeschaltet ist, die bei Vorliegen eines Maßes (M, Mw...Mz) für die Relativposition sowie einer Kennung (K) das Maß (M) für die Relativposition und die Kennung (K) einander zuordnet und als gemeinsamen Datensatz (D) bereithält, und/oder

- dass die Detektoreinheit (1) eine Ausleseeinheit zur Ermittlung einer Kennung (K) aufweist, die in einem in einem Bildbereich des Abbilds des Positionierungselements (10) abgebildeten und auf dem Positionierungselement (10) aufgedruckten Code (14a), insbesondere einem Barcode oder QR-Code, enthalten ist, wobei der Positionsbestimmungseinheit (44) oder der Mittelwertbestimmungseinheit (5) eine der Ausleseeinheit nachgeschaltete Zuordnungseinheit (46) nachgeschaltet ist, die bei Vorliegen eines Maßes (M, Mw...Mz) für die Relativposition sowie einer Kennung (K) das Maß (M) für die Relativposition und die Kennung (K) einander zuordnet und als gemeinsamen Datensatz (D) bereithält, und/oder eine Triggereinheit (47) vorgesehen ist, die die Verarbeitungseinheit (40) zu vorgegeben Zeitpunkten, insbesondere in vorgegebenen Zeitintervallen oder laufend, aktiviert und die jeweils ermittelte Relativposition (M), insbesondere auf dem Display (17) der Detektoreinheit, anzeigt.

12. Detektoreinheit (1) nach einem der Ansprüche 7 bis 11, ausgebildet durch ein Mobiltelefon (1a) mit einer im Mobiltelefon integrierten Flächenbildkamera (3), wobei auf dem Mobiltelefon (1a) eine Softwareanwendung abläuft, die ein Maß für die Relativposition mit einem Verfahren nach einem der Ansprüche 1 bis 6 bestimmt und/oder die vom Mobiltelefon (1a) ausgeführt wird und die Funktion der nachgeschalteten Verarbeitungseinheit (40) ausführt.

13. Anordnung mit einer Detektoreinheit nach einem der Ansprüche 7 bis 12 sowie einem Positionierungselement (10) mit zwei auf ihm befindlichen, insbesondere aufgedruckten, Balken (12, 13), nämlich ein Referenzbalken (13) mit konstanter Dicke und ein Messbalken (12) mit steigender, nach einer Richtung zunehmender Dicke mit vom Hintergrund des Positionierungselements (10) abweichender Farbgebung angeordnet ist, wobei die beiden Balken (12, 13) einander gegenüberliegen, und dass insbesondere die minimale Dicke des Messbalkens (12) größer oder gleich der Dicke des Referenzbalkens (13) ist.

Fig. 1

Fig. 1a

EP 2 682 844 A2

Fig. 1b

Fig. 2a

Fig. 2b

Fig. 2c

Fig. 3

Fig. 4

47

3

1

41

31

40

42

22

43

44

M

17

Fig. 5

## Fig. 6

## Fig. 7

Fig. 8

Fig. 9

**IN DER BESCHREIBUNG AUFGEFÜHRTE DOKUMENTE**

**In der Beschreibung aufgeführte Patentdokumente**

- AT 5042010 A

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*